# EUROPEAN PATENT SPECIFICATION

(11) **EP 2 890 163 B1**
(45) Date of publication and mention of the grant of the patent: **14.09.2016**
(21) Application number: 12884841.3
(22) Date of filing: 21.09.2012
(51) Int. Cl.: H04W 4/02, H04W 64/00, H04W 36/08

(54) **METHOD, DEVICE AND SYSTEM FOR LOCATING USER EQUIPMENT**
VERFAHREN, VORRICHTUNG UND SYSTEM ZUM LOKALISIEREN EINER BENUTZERVORRICHTUNG
PROCÉDÉ, DISPOSITIF ET SYSTÈME POUR LA LOCALISATION D'UN ÉQUIPEMENT D'UTILISATEUR

(43) Date of publication of application: 01.07.2015
(73) Proprietor: Huawei Technologies Co., Ltd., Longgang District Shenzhen, Guangdong 518129 (CN)
(72) Inventor: WU, Tong, Shenzhen Guangdong 518129 (CN); XIAO, Dengkun, Shenzhen Guangdong 518129 (CN); CUI, Jie, Shenzhen Guangdong 518129 (CN)
(74) Representative: Pfenning, Meinig & Partner mbB
(86) International application number: PCT/CN2012/081777
(87) International publication number: WO 2014/043899

(56) References cited:
- CN-A- 101 873 524
- CN-A- 101 931 863
- US-A1- 2001 041 570
- US-A1- 2003 139 183
- US-A1- 2011 098 048
- US-A1- 2012 225 647
- "3rd Generation Partnership Project; Technical Specification Group Radio Access Network; Evolved Universal Terrestrial Radio Access Network (E-UTRAN); X2 application protocol (X2AP) (Release 10)", 3GPP STANDARD; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V10.2.0, 24 June 2011 (2011-06-24), pages 1-130, XP050553587, [retrieved on 2011-06-24]
- HELENIUS, ATTE.: 'Performance of Handover in Long Term Evolution.' 01 November 2011, XP055180354

## Description

### TECHNICAL FIELD

The present invention relates to the field of communications technologies, and in particular, to a method, an apparatus, and a system for user equipment positioning.

### BACKGROUND

The user equipment (User Equipment, UE for short) positioning technology in radio networks has become more and more mature. Taking an enhanced cell ID positioning technology (Enhanced Cell-ID positioning method, E-CID for short) as an example: a base station where a UE belongs sends a cell-specific reference signal (Cell-specific Reference Signals, CRS for short) to the UE, receives a sounding reference signal (Sounding Reference Signal, SRS for short) sent by the UE according to the CRS, and records a time difference (Rx1-Tx1) between the moment when the CRS is sent (Tx1) and the moment when the SRS is received (Rx1); the UE records a time difference (Rx2-Tx2) between the moment when the CRS is received (Rx2) and the moment when the SRS is sent to the base station (Tx2). The UE sends the recorded Rx2-Tx2 to the base station, and the base station reports the Rx1-Tx1, the Rx2-Tx2, and an obtained angle of arrival (Angle of Arrival, AOA for short) to a positioning server (Evolved Serving Mobile Location Centre, E-SMLC for short). The positioning server calculates, according to the difference values Rx1-Tx1 and Rx2-Tx2, and a signal broadcast speed calculated in advance, a circular area with the base station as the center of the circle and a distance from the base station to a current position of the UE as a radius, and calculates the position of the UE in the obtained circular area according to the obtained AOA.

The UE positioning measurement performed by the base station is usually accompanied by other operations related to the UE. A node handover (Handover, HO for short) is a typical operation and is performed frequently. Considering the mobility of the UE, the UE often needs to be handed over between different base stations. A base station where the UE belongs before the handover is referred to as a source node (Source NodeB, SNB for short), and a base station where the UE belongs after the handover is referred to as a target node (Target NodeB, TNB for short).
Generally, if the UE is handed over during the UE positioning, the base station first handles the HO operation of the UE. After the UE is handed over from the SNB to the TNB, the positioning server resends a positioning request to the TNB, and the TNB performs positioning measurement on the UE again.

The "3^{rd} Generation Partnership Projectt; Technical Specification Group Radio access Network; Evolved Universal Terrestrial Radio Access Network (E-UTRAN); X2 application protocol X2AP) (Release 10)", 3GPP STANDARD, 3GPP TS 36.423 V10.2.0, 3^{RD} GENERATION PARTNERSHIP PROJECT (3GPP), Mobile Competence Center; Route des Lucioles 650; F-06921 Sophia-Antipolis Cedex, France describes the handover procedure of a UE between a source eNB and a target eNB in the context of the X2 application protocol.

US patent application publication US 2003/0139183 describes a method for operating a mobile station in cooperation with a network operator, as is a system including the mobile station and the network operator. The method operates, upon an occurrence of a RR procedure, including HO and CRS, that affects the mobile station, to determine if a location procedure is ongoing in the mobile station and, if it is, to complete the location procedure and to report the measurement results (which may be a failure indication) in a message from the mobile station to a target radio network controller. The location procedure may be, for example, a LCS procedure executed during a Combined Hard Handover and SRNS Relocation procedure for a PS and CS domain, and applies to both intra-SGSN SRNS relocation and for inter-SGSN and SRNS relocation. The location procedure may also be, for example, a LCS procedure executed during a Combined Cell/URA/GRA Update and SRNS Relocation procedure for the PS domain, and also applies to both intra-SGSN SRNS relocation and for inter-SGSN SRNS relocation. When the location procedure is a LCS procedure, the method further sends LCS parameters from a source RNC to the target RNC. The LCS parameters can be sent in a Source RNC to Target RNC Transparent Container in a Relocation Required message, or in a Relocation Commit message, or in a Forward SRNS Context message. The measurement results message may be sent by the mobile station before or after sending a UTRAN Mobility Information Confirm message from the mobile station to the target RNC/BSC.
During the UE positioning process, the inventor finds that the prior art at least has the following problem: the positioning measurement of the UE is already started in the SNB before the handover; after the UE is handed over to the TNB, the UE performs positioning measurement again automatically. However, a mobility management entity (Mobility Management Entity, MME for short) detects the handover process of the UE at this time and informs the E-SMLC; the E-SMLC triggers a new positioning process for the UE after the UE is handed over to the TNB, to perform positioning measurement on the UE again. As a result, the positioning measurement is performed repeatedly, and the signaling amount on an air interface is increased, thereby wasting network resources of an access network (Access Network, AN for short)

### SUMMARY

Embodiments of the present invention provide a method, an apparatus, and a system for user equipment positioning, which can continue, by using a positioning process before a handover of a UE, positioning measurement on the UE after the UE is handed over to a TNB, thereby avoiding repeatedly triggering the positioning process and saving network resources.

In a first aspect, an embodiment of the present invention provides a user equipment positioning method, including:
during positioning measurement of a user equipment UE under the source node, when the UE needs to be handed over from a source node to a target node, receiving, by the target node, user identification information of the UE sent by the source node, where the user identification information is used for uniquely identifying the UE;
sending, by the target node, an indication of not notifying a positioning server to a mobility management entity MME, where the indication of not notifying a positioning server is used for instructing the MME to cancel informing the positioning server that the UE has been handed over; and
after the UE is handed over to the target node, performing, by the target node, positioning measurement on the UE according to the user identification information, and reporting obtained positioning measurement data and the user identification information to the positioning server.

### BRIEF DESCRIPTION OF DRAWINGS

To describe the technical solutions in the embodiments of the present invention more clearly, the following briefly introduces accompanying drawings required for describing the embodiments of the present invention. Apparently, the accompanying drawings in the following description show merely some embodiments of the present invention, and a person of ordinary skill in the art may still derive other drawings according to these accompanying drawings without creative efforts.
FIG. 1 is a schematic diagram of a network architecture without an X2 interface between base stations in an embodiment of the present invention;
FIG. 2 is a flow chart of a first user equipment positioning method in an embodiment of the present invention;
FIG. 3 is a flow chart of a second user equipment positioning method in an embodiment of the present invention;
FIG. 4 is a flow chart of a third user equipment positioning method in an embodiment of the present invention;
FIG. 5 is a schematic diagram of a network architecture with an X2 interface between base stations in an embodiment of the present invention;
FIG. 6 is a flow chart of a fourth user equipment positioning method in an embodiment of the present invention;
FIG. 7 is a flow chart of signaling interworking in an embodiment of the present invention;
FIG. 8 is a schematic diagram of a network architecture where base stations belong to different MMEs in an embodiment of the present invention;
FIG. 9 is a flow chart of a fifth user equipment positioning method in an embodiment of the present invention;
FIG. 10 is another flow chart of signaling interworking in an embodiment of the present invention;
FIG. 11 is a schematic structural diagram of a first target base station in an embodiment of the present invention;
FIG. 12 is a schematic structural diagram of a second target base station in an embodiment of the present invention;
FIG. 13 is a schematic structural diagram of a first source base station in an embodiment of the present invention;
FIG. 14 is a schematic structural diagram of a third target base station in an embodiment of the present invention;
FIG. 15 is a schematic structural diagram of a second source base station in an embodiment of the present invention;
FIG. 16 is a schematic structural diagram of a fourth target base station in an embodiment of the present invention;
FIG. 17 is a structural diagram of a first user equipment positioning system in an embodiment of the present invention;
FIG. 18 is a structural diagram of a second user equipment positioning system in an embodiment of the present invention;
FIG. 19 is a schematic structural diagram of a fifth target base station in an embodiment of the present invention;
FIG. 20 is a schematic structural diagram of a third source base station in an embodiment of the present invention;
FIG. 21 is a schematic structural diagram of a sixth target base station in an embodiment of the present invention;
FIG. 22 is a schematic structural diagram of a fourth source base station in an embodiment of the present invention;
FIG. 23 is a schematic structural diagram of a seventh target base station in an embodiment of the present invention;
FIG. 24 is a structural diagram of a third user equipment positioning system in an embodiment of the present invention; and
FIG. 25 is a structural diagram of a fourth user equipment positioning system in an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

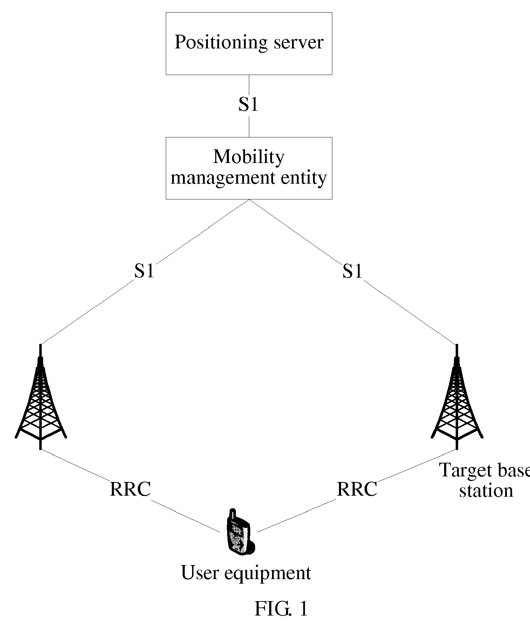

Before the embodiments of the present invention are described, steps of a handover procedure during UE positioning in the prior art are described first:
As shown in FIG. 1, a source base station and a target base station are managed by the same MME. The source base station and target base station communicate with the MME through S1 interfaces; the MME communicates with a positioning server through an S1 interface; the UE communicates with the source base station and target base station through radio resource control protocol (Radio Resource Control, RRC for short) signaling.

In the prior art, the UE first performs positioning measurement under the source base station to measure Rx1-Tx1. At this time, the UE needs to be handed over as the UE moves. After the UE is handed over to the target base station, the UE restarts positioning measurement under the target base station to measure Rx1-Tx1 again, and reports a measurement result to the target base station. The MME can detect that the UE is handed over from the source base station to the target base station; therefore, after the UE is handed over to the target base station, the MME informs the positioning server that the UE is handed over, and the positioning server re-initiates a positioning process to the target base station (or UE) to measure the UE under the target base station again.

Generally, during the positioning, if no X2 interface used for communication is present between the source base station and target base station, the source base station fails to send, to the target base station, user identification information of the UE assigned by the positioning server to the source base station. Therefore, even if the UE restarts positioning measurement after being handed over to the target base station (for the convenience of expression, the positioning measurement restarted after the UE is handed over to the target base station is referred to as handover-based re-positioning measurement in the same E-CID process in the following) and reports a measured quantity Rx1-Tx1 to the target base station. The target base station cannot determine which UE the measured quantity received belongs to, and therefore fails to complete the measurement on Rx2-Tx2 and an AOA; consequently, the handover-based re-positioning measurement in the same E-CID process fails. If an X2 interface used for communication is present between the source base station and target base station, through a signaling enhancing solution for an X2 interface between base stations, the source base station can send the user identification information of the UE to the target base station; therefore, after receiving the measured quantity Rx1-Tx1 reported by the UE, the target base station can determine the UE that sends the measured quantity, and measure the Rx2-Tx2 and AOA for the UE; then the target base station reports the Rx1-Tx1, Rx2-Tx2 and AOA to the positioning server through the MME, thereby completing the positioning of the UE under the target base station.

However, during the re-positioning measurement, no matter whether an X2 interface is present between base stations or not, after the UE is handed over to the target base station, the MME informs the positioning server of a UE handover action based on a detection result about the UE handover action, so that the positioning server triggers a new positioning process for the UE; or the positioning server triggers a new positioning process for the UE based on a timing result of an internal TIMER timer. Therefore, no matter whether the UE handover-based re-positioning measurement in the same E-CID process is successful or not, the positioning server triggers a new positioning process for the UE, which wastes network resources of an access network.

Based on the foregoing technical problem, an embodiment of the present invention provides a user equipment positioning method, which can complete handover-based re-positioning measurement in the same E-CID process after the UE is handed over to the target base station in a scenario in which the UE is handed over during positioning measurement, and cancel the positioning process repeatedly triggered by the positioning server for the UE, thereby reducing unnecessary signaling overheads while guaranteeing successful positioning.

### Embodiment 1

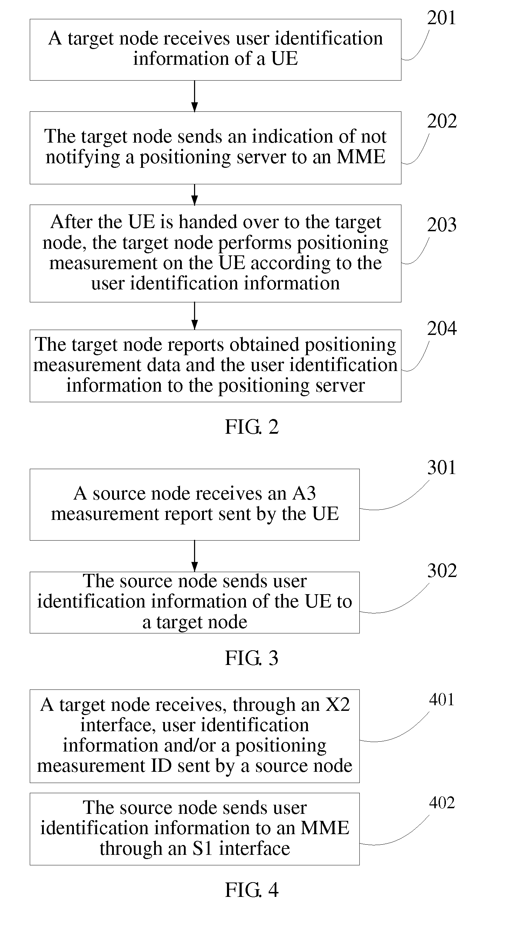

An embodiment of the present invention provides a user equipment positioning method. As shown in FIG. 2, the method includes the following steps:
201: A target node receives user identification information of a UE.

During positioning measurement of the UE, when the UE requires a handover (HandOver) from a source node to a target node, the target node receives user identification information of the UE. The user identification information is used for uniquely identifying the UE.

202: The target node sends an indication of not notifying a positioning server to an MME.

The target node sends an indication of not notifying a positioning server to the MME, where the indication of not notifying a positioning server is used for instructing the MME to cancel informing the positioning server that the UE has been handed over, so as to prevent the positioning server from triggering a new positioning process for the UE after the UE is handed over to the target node, thereby preventing the positioning server from positioning the UE repeatedly.

203: After the UE is handed over to the target node, the target node performs positioning measurement on the UE according to the user identification information.

Measured quantities that need to be obtained by the target node during the positioning measurement on the UE include first positioning measurement data and second positioning measurement data, where the first positioning measurement data is Rx1-Tx1 measured by the UE under the target node and reported to the target node, and the second positioning measurement data is Rx2-Tx2 and an AOA measured by the target node.

204: The target node reports obtained positioning measurement data and the user identification information to the positioning server.

The target node reports the Rx1-Tx1, Rx2-Tx2, AOA, and user identification information to the positioning server; the positioning server parses the user identification information, determines the UE of the positioning measurement, and calculates a position of the UE according to the Rx1-Tx1, Rx2-Tx2, AOA, and position information of the target node, thereby completing UE positioning.

When the UE is under the source node, the positioning server assigns a user identifier to the UE and initiates positioning measurement on the UE. The UE starts to measure a measured quantity Rx1-Tx1. At this time, the UE moves and hence generates displacement, so it is necessary to initiate a handover procedure for the UE to hand over the UE from the source node to the target node. During the handover, the target node receives the user identification information of the UE, so as to perform positioning measurement on the UE after the UE is handed over to the target node, and sends an indication of not notifying a positioning server to the MME; after the UE is handed over to the target node, the MME does not inform the positioning server that the UE has been handed over, so as to prevent the positioning server from triggering a new positioning process for the UE. After the UE is handed over to the target node, the target node determines that the UE requires positioning measurement according to the user identification information of the UE, measures Rx2-Tx2 and an AOA, and receives the Rx1-Tx1 remeasured and reported by the UE under the target node. The target node sends the measured data and the user identification information of the UE to the positioning server through the MME, and the positioning server calculates the specific position of the UE according to the measured data and the user identification information of the UE. Compared with the prior art in which the target node fails to perform positioning because the target node cannot determine a UE that requires positioning, the user equipment positioning method provided by the embodiment of the present invention can implement that the target node performs positioning measurement on the accessing UE through receiving user identification information; compared with the prior art in which the positioning server triggers a new positioning process for the UE after the UE accesses the target node, the present invention may unify UE positioning operations among the source node, target node, MME, and positioning server, and prevent the positioning server from positioning the UE repeatedly, thereby saving network resources of an access network.

### Embodiment 2

An embodiment of the present invention provides a user equipment positioning method. As shown in FIG. 3, the method includes the following steps:
301: A source node receives an A3 measurement report sent by the UE.
   During positioning measurement of the UE, when the UE needs to be handed over from a source node to a target node, the source node receives an A3 measurement report sent by the UE, where the A3 measurement report is used by the UE to request a handover from the source node.
302: The source node sends user identification information of the UE to a target node.

Therefore, after the UE is handed over to the target node, the target node identifies the UE according to the user identification information, and performs positioning measurement on the UE, where the user identification information is used for uniquely identifying the UE.

When the UE is under the source node, the positioning server assigns a user identifier to the UE and initiates positioning measurement on the UE. The UE starts to measure a measured quantity Rx1-Tx1. At this time, the UE moves and hence generates displacement, so it is necessary to initiate a handover procedure for the UE to hand over the UE from the source node to the target node. During the handover, the source node sends user identification information of the UE to the target node, so that after the UE is handed over to the target node, the target node performs positioning measurement on the UE and sends an indication of not notifying a positioning server to the MME; after the UE is handed over to the target node, the MME does not inform the positioning server that the UE has been handed over, so as to prevent the positioning server from triggering a new positioning process for the UE, thereby preventing the positioning server from triggering a new positioning process for the UE after the UE is handed over to the target node. After the UE is handed over to the target node, the target node determines that the UE requires positioning measurement according to the user identification information of the UE, measures Rx2-Tx2 and an AOA, and receives the Rx1-Tx1 remeasured and reported by the UE under the target node. The target node sends the measured data and the user identification information of the UE to the positioning server through the MME, and the positioning server calculates the specific position of the UE according to the measured data and the user identification information of the UE. Compared with the prior art in which the target node fails to perform positioning because the target node cannot determine a UE that requires positioning, the user equipment positioning method provided by the embodiment of the present invention can implement that the target node performs positioning measurement on the accessing UE through sending user identification information to the target base station.

### Embodiment 3

An embodiment of the present invention further provides a user equipment positioning method. As shown in FIG. 4, the method includes the following steps:
401: During positioning measurement of a UE, when the UE needs to be handed over from a source node to a target node, the target node receives, through an X2 interface, user identification information and/or a positioning measurement ID sent by the source node.

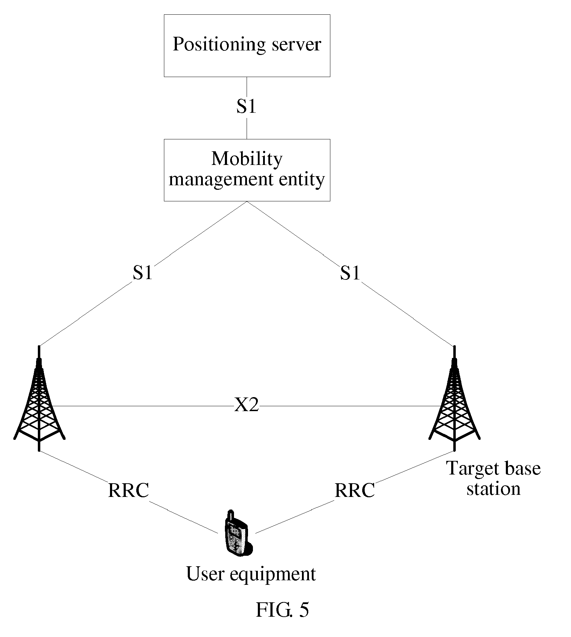

As shown in FIG. 5, on the basis of FIG. 1, when an X2 interface used for communication is present between a source node and a target node, the source node sends user identification information to the target node through the X2 interface. The user identification information includes at least one type of the following information: a long term evolution positioning protocol type-A transaction ID LPPa Transaction ID, an evolved serving mobile location centre measurement ID E-SMLC UE Measurement ID, and an evolved base station user end measurement ID eNB UE Measurement ID. The LPPa Transaction ID and E-SMLC UE Measurement ID are user identifiers having a unique identification function, assigned by a positioning server to the UE during the positioning measurement of the UE under the source node, and used for instructing the UE to perform positioning measurement; the eNB UE Measurement ID is a user identifier having a unique identification function, assigned by the source node to the UE during the positioning measurement of the UE under the source node, and used for instructing the UE to perform positioning measurement.

Preferably, the source node sends the three user identifiers to the target node; after the UE is handed over to the target node, the target node identifies the UE that requires positioning according to the three user identifiers sent by the source node, and performs positioning measurement on the UE.

Optionally, the source node may also send a positioning measurement ID to the target node through the X2 interface, where the positioning measurement ID is used for identifying a positioning technology employed for positioning the UE. In the embodiment of the present invention, an E-CID positioning technology is taken as an example for description, and the positioning measurement ID is an E-CID identifier.

402: As shown in FIG. 1, when no X2 interface used for communication is present between the source node and the target nod, as a substitute for step 401, the source node sends user identification information to the target node through an MME. Specifically, the source node sends user identification information to the MME through an S1 interface, and the MME sends the user identification information to the target node through an S1 interface.

Optionally, the source node may also send a positioning measurement ID to the target node through the MME; the transmission manner is the same as the transmission manner in which the source node sends the user identification information to the target node through the MME, and details are not repeatedly described herein.

Further, the target node may also send an indication of not notifying a positioning server to the MME after the UE is handed over from the source node to the target node during positioning measurement of the UE, and after the UE is handed over to the target node, the MME does not inform the positioning server that the UE has been handed over, so as to prevent the positioning server from triggering a new positioning process for the UE, thereby preventing the MME from canceling sending to the positioning server a positioning request for positioning the UE.

The indication of not notifying a positioning server may be a continuous positioning ContinuousPositioning indication or an indication of not triggering new positioning NoTriggerNewPositioning; and during an actual application, the name of the indication of not notifying a positioning server is not limited.

In the user equipment positioning method provided by the embodiment of the present invention, a source node sends user identification information and a positioning measurement ID to a target node through an X2 interface or through an MME and S1 interface; after the UE is handed over to the target node, the target node can determine the UE that requires positioning according to the received user identification information and positioning measurement ID, and performing positioning measurement on the UE, thereby guaranteeing successful UE positioning under the target node. At the same time, it can also be prevented that, after the UE is handed over to the target node, the positioning server retriggers a positioning process for the UE, thereby reducing signaling overheads and saving network resources of an access network.

Based on the E-CID positioning technology and with an evolved base station (evolved Node B, eNB for short) serving as a node, the following describes the implementation manners of the UE handover in the network architecture shown in FIG. 1 and FIG. 5 in detail with reference to the foregoing embodiments.

### Embodiment 4

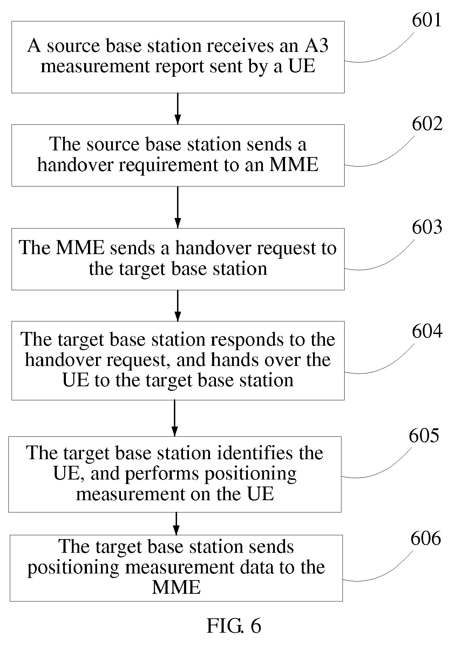

In the network architecture shown in FIG. 1, no X2 interface used for communication is present between a source base station and a target base station. As shown in FIG. 6, an embodiment of the present invention provides a user equipment positioning method based on the network architecture shown in FIG. 1, and the method includes the following steps:
601: A source base station receives an A3 measurement report sent by a UE.
   During positioning measurement of the UE, when the UE requires a handover (HandOver) from a source base station to a target base station, the UE sends to the source base station an A3 measurement report used for requesting a handover, where the A3 measurement report carries necessary information required for the handover.
602: The source base station sends a handover requirement to an MME.

After receiving the A3 measurement report sent by the UE, the source base station sends a handover requirement HO Required to the MME through an S1 interface, where the HO Required carries an LPPa Transaction ID, an E-SMLC UE Measurement ID, an eNB UE Measurement ID, and an E-CID identifier of the UE. The LPPa Transaction ID and E-SMLC UE Measurement ID are user identifiers assigned by a positioning server to the UE during the positioning measurement of the UE under the source base station; the eNB UE Measurement ID is a user identifier assigned by the source base station to the UE during the positioning measurement of the UE under the source base station; and the E-CID identifier is used to represent a positioning technology employed by the positioning server during the positioning measurement of the UE under the source base station.

A protocol format for the source base station to send the HO Required to the MME is shown in the following table (table 1):

| **IE/Group Name** | **Presence** | **Range** | **IE type and reference** | **Semantics description** | **Criticality** | **Assigned Criticality** |
|---|---|---|---|---|---|---|
| Message Type | M | | 9.2.1.1 | | YES | reject |
| MME UE S1 AP ID | M | | 9.2.3.3 | | YES | reject |
| >E-CID UE Indication | O | | | | - | - |
| eNB UE S1AP ID | M | | 9.2.3.4 | | YES | reject |
| Handover Type | M | | 9.2.1.13 | | YES | reject |
| Cause | M | | 9.2.1.3 | | YES | ignore |
| Target ID | M | | 9.2.1.6 | | YES | reject |
| LPPa Transaction ID | O | | | | | |
| E-SMLC UE Measurement ID | O | | INTEGER(1..15,...) | | YES | reject |
| eNB UE Measurement ID | O | | INTEGER(1..15,...) | | YES | reject |
| Direct Forwarding Path Availability | O | | 9.2.3.15 | | YES | ignore |
| SRVCC HO Indication | O | | 9.2.1.59 | | YES | reject |
| Source to Target Transparent Container | M | | 9.2.1.56 | | YES | reject |
| Source to Target Transparent Container Secondary | O | | Source to Target Transparent Container 9.2.1.56 | | YES | reject |
| MS Classmark 2 | C-ifSRVCCtoGERAN | | 9.2.1.64 | | YES | reject |
| MS Classmark 3 | C-ifSRVCCtoGERAN | | 9.2.1.65 | | YES | ignore |
| CSG Id | O | | 9.2.1.62 | | YES | reject |
| Cell Access Mode | O | | 9.2.1.74 | | YES | reject |
| PS Service Not Available | O | | 9.2.1.77 | | YES | ignore |

>E_CID UE Indication is the E_CID identifier, and the Presence item corresponding to the E_CID identifier may be set as an optional item (Optional), indicating that the flag of the E_CID identifier is settable. When the flag of the E_CID identifier is set to 1, it indicates that the positioning technology is the E_CID technology; if the flag of the E_CID identifier is set to 0, it indicates that the positioning technology is not the E_CID technology and may be another positioning technology. The items of the LPPa Transaction ID, E-SMLC UE Measurement ID, and eNB UE Measurement ID corresponding to Presence may be set as optional items respectively. The items of the E-SMLC UE Measurement ID and eNB UE Measurement ID corresponding to IE type and reference are set to INTEGER(1..15,...) respectively, the items corresponding to Criticality are set to YES respectively, and the items corresponding to Assigned Criticality are set to reject respectively, indicating that the HO Required carries the LPPa Transaction ID, E-SMLC UE Measurement ID, and eNB UE Measurement ID of the UE.

In the embodiment of the present invention, that the user identification information includes the LPPa Transaction ID, E-SMLC UE Measurement ID, and eNB UE Measurement ID of the UE is taken as an example for description. In an actual application, it is also possible that the user identification information only includes any one or any two of the three IDs. Particularly, when the user identification information includes the eNB UE Measurement ID, and includes at least one of the LPPa Transaction ID and E-SMLC UE Measurement ID, the source base station needs to bind the eNB UE Measurement ID to the LPPa Transaction ID (or to the E-SMLC UE Measurement ID, or to the LPPa Transaction ID and E-SMLC UE Measurement ID) before sending the HO Required. The embodiment of the present invention does not limit the quantity and content of the user identification information.

603: The MME sends a handover request to the target base station.

The MME adds the LPPa Transaction ID, E-SMLC UE Measurement ID, eNB UE Measurement ID, and E-CID identifier of the UE carried in the HO Required to the handover request HO Request, and then sends the HO Request to the target base station through an S1 interface.

A protocol format for the MME to send the HO Request to the target base station is shown in the following table (table 2):

| **IE/Group Name** | **Presence** | **Range** | **IE type and reference** | **Semantics description** | **Criticality** | **Assigned Criticality** |
|---|---|---|---|---|---|---|
| Message Type | M | | 9.2.1.1 | | YES | reject |
| MME UE S1AP ID | M | | 9.2.3.3 | | YES | reject |
| >E-CID UE Indication | O | | | | - | - |
| Handover Type | M | | 9.2.1.13 | | YES | reject |
| Cause | M | | 9.2.1.3 | | YES | ignore |
| UE Aggregate Maximum Bit Rate | M | | 9.2.1.20 | | YES | reject |
| E-RABs To Be Setup List | | 1 | | | YES | reject |
| >E-RABs To Be Setup Item IEs | | 1 to <maxnoof E-RABs> | | | EACH | reject |
| >>E-RAB ID | M | | 9.2.1.2 | | - | |
| >>Transport Layer Address | M | | 9.2.2.1 | | - | |
| >>GTP-TEID | M | | 9.2.2.2 | To deliver UL PDUs | - | |
| >>E-RAB Level QoS Parameters | M | | 9.2.1.15 | Includes necessary QoS parameters | - | |
| >>Data Forwarding Not Possible | O | | 9.2.1.76 | | YES | ignore |
| Source to Target Transparent Container | M | | 9.2.1.56 | | YES | reject |
| UE Security Capabilities | M | | 9.2.1.40 | | YES | reject |
| Handover Restriction List | O | | 9.2.1.22 | | YES | ignore |
| LPPa Transaction ID | O | | | | | |
| E-SMLC UE Measurement ID | O | | INTEGER(1 ..15,...) | | YES | reject |
| eNB UE Measurement ID | O | | INTEGER(1 ..15,...) | | YES | reject |
| Trace Activation | O | | 9.2.1.4 | | YES | ignore |
| Request Type | O | | 9.2.1.34 | | YES | ignore |
| SRVCC Operation Possible | O | | 9.2.1.58 | | YES | ignore |
| Security Context | M | | 9.2.1.26 | | YES | reject |
| NAS Security Parameters to E-UTRAN | C-iffromUT RANGERA N | | 9.2.3.31 | The eNB shall use this IE as specified in TS 33.401 [15]. | YES | reject |
| CSG Id | O | | 9.2.1.62 | | YES | reject |
| CSG Membership Status | O | | 9.2.1.73 | | YES | ignore |
| GUMMEI | O | | 9.2.3.9 | This IE indicates the MME serving the UE | YES | ignore |
| MME UE S1AP ID 2 | O | | 9.2.3.3 | This IE indicates the MME UE S1AP ID assigned by the MME | YES | ignore |
| | | | | | | |
| Management Based MDT Allowed | O | | 9.2.1.83 | | YES | ignore |

The settings of the four table entries, namely, >E_CID UE Indication, LPPa Transaction ID, E-SMLC UE Measurement ID, and eNB UE Measurement ID are the same as those in table 1, and details are not repeatedly described herein.

604: The target base station responds to the handover request, and hands over the UE to the target base station.

When responding to the HO Request sent by the MME, the target base station sends an indication of not notifying a positioning server to the MME through an S1 interface, where the indication of not notifying a positioning server may be a continuous positioning ContinuousPositioning indication or an indication of not triggering new positioning NoTriggerNewPositioning; In an actual application, the specific name of the indication of not notifying a positioning server is not limited to the foregoing two names.

At the same time, the target base station saves the LPPa Transaction ID, E-SMLC UE Measurement ID, eNB UE Measurement ID and E-CID identifier of the UE carried in the HO Request.

A protocol format for the target base station to respond to the handover request is shown in the following table (table 3):

| **IE/Group Name** | **Presence** | **Range** | **IE type and reference** | **Semantics description** | **Criticality** | **Assigned Criticality** |
|---|---|---|---|---|---|---|
| Message Type | M | | 9.2.1.1 | | YES | reject |
| MME UE S1AP ID | M | | 9.2.3.3 | | YES | ignore |
| eNB UE S1AP ID | M | | 9.2.3.4 | allocated at the target eNB | YES | ignore |
| E-RABs Admitted List | | 1 | | | YES | ignore |
| >E-RABs Admitted Item IEs | | 1 to <maxnoof E-RABs> | | | EACH | ignore |
| >>E-RAB ID | M | | 9.2.1.2 | | - | |
| >>Transport Layer Address | M | | 9.2.2.1 | | - | |
| >>GTP-TEID | M | | 9.2.2.2 | To deliver DL PDUs | - | |
| >>DL Transport Layer Address | O | | 9.2.2.1 | | - | |
| >>DL GTP-TEID | O | | 9.2.2.2 | To deliver forwarded DL PDCP SDUs. | - | |
| >>UL Transport Layer Address | O | | 9.2.2.1 | | - | |
| >>UL GTP-TEID | O | | 9.2.2.2 | To deliver forwarded UL PDCP SDUs. | - | |
| E-RABs Failed to Setup List | O | | E-RAB List 9.2.1.36 | a value for E-RAB ID shall only be present once in E-RABs Admitted List IE + E-RABs Failed to Setup List IE | YES | ignore |
| Target to Source Transparent Container | M | | 9.2.1.57 | | YES | reject |
| ContinuousPositioning | O | | | | - | - |
| CSG Id | O | | 9.2.1.62 | | YES | ignore |
| Criticality Diagnostics | O | | 9.2.1.21 | | YES | ignore |

The ContinuousPositioning indication is used as the indication of not notifying a positioning server, and an item of ContinuousPositioning corresponding to Presence is set as an optional item (Optional), indicating that the flag of the item is optional. When the flag of the ContinuousPositioning indication is 1, it indicates that the flag of the ContinuousPositioning indication is set to canceling a positioning request.

It should be noted that NoTriggerNewPositioning and ContinuousPositioning in the embodiment of the present invention are merely two specific types of signaling in the indication of not notifying a positioning server. In an actual application, any signaling/indication having a function of instructing the MME to cancel informing the positioning server that the UE has been handed over shall fall within the definition of the indication of not notifying a positioning server, that is, any signaling/indication that only makes simple replacement to the signaling/indication name or indication form (indication manner) and has the same function as the indication of not notifying a positioning server described in the foregoing belongs to the indication of not notifying a positioning server in the embodiment of the present invention, and such signaling/indication is not substantially different from the NoTriggerNewPositioning and ContinuousPositioning described in the foregoing.

605: The target base station identifies the UE, and performs positioning measurement on the UE.

The target base station identifies the UE that is handed over and requires re-positioning according to the LPPa Transaction ID, E-SMLC UE Measurement ID, and eNB UE Measurement ID of the UE, and determines, according to the E-CID identifier, to use the E-CID positioning technology to perform positioning measurement on the UE.

The target base station receives a measured quantity Rx1-Tx1 measured and reported by the UE under the target base station, and measures a measured quantity Rx2-Tx2 and an AOA.

606: The target base station sends positioning measurement data to the MME.

The target base station sends the measured quantities Rx1-Tx1 and Rx2-Tx2, and the AOA to the MME through an S1 interface, and also sent are the LPPa Transaction ID, E-SMLC UE Measurement ID, and eNB UE Measurement ID of the UE. The MME transparently sends, to the positioning server through an S1 interface, the positioning measurement data sent by the target base station; the positioning server parses the LPPa Transaction ID, E-SMLC UE Measurement ID, and eNB UE Measurement ID of the UE, identifies the UE that requires positioning, and then calculates a current specific position of the UE according to the measured quantities Rx1-Tx1 and Rx2-Tx2, and the AOA, thereby completing UE positioning under the target base station.

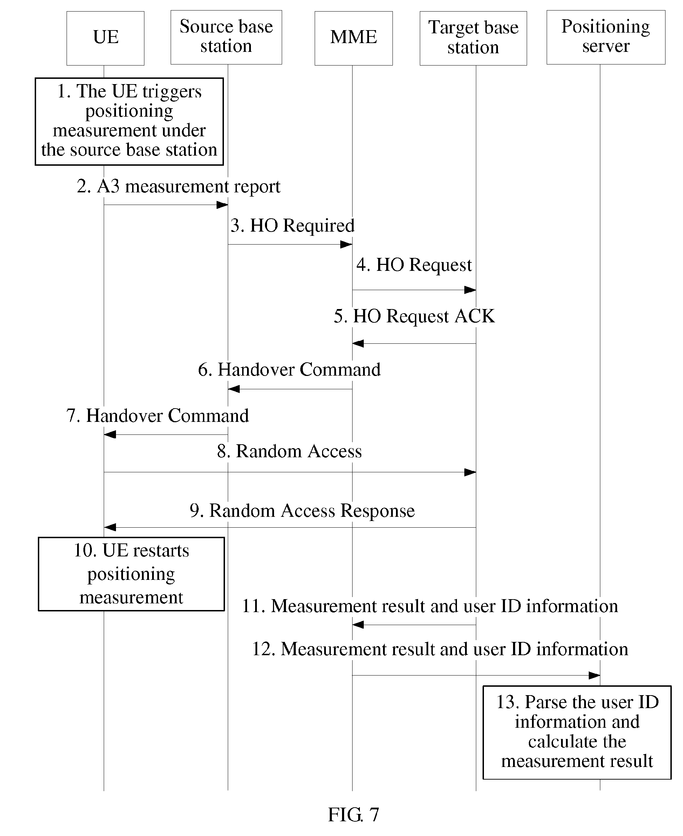

As shown in FIG. 7, in an application scenario based on the network architecture shown in FIG. 1, a signaling interworking flow among the UE, source base station, target base station, MME, and positioning server is as follows:
1) The UE triggers an E-CID positioning measurement under the source base station according to LPPa signaling and RRC signaling.
2) The UE sends an A3 measurement report to the source base station, to trigger a handover criterion.
3) The source base station sends HO Required to the MME through an S1 interface, where the HO Required contains E-CID positioning measurement related information originally assigned by the positioning server to the UE, including: an LPPa Transaction ID, an E-SMLC UE Measurement ID, an eNB UE Measurement ID, and an E-CID identifier.
4) The MME sends an HO Request to the target base station through an S1 interface, where the HO Request also contains the E-CID positioning measurement related information originally assigned by the positioning server to the UE, including: the LPPa Transaction ID, the E-SMLC UE Measurement ID, the eNB UE Measurement ID, and the E-CID identifier.
5) The target base station sends a handover request acknowledgment (Handover Request Acknowledgement, HO Request ACK for short) to the MME through the S1 interface, where the HO Request ACK is added with an indication for instructing the MME to cancel informing the positioning server that the UE is handed over; for example, the indication may be Continuous Positioning or NoTriggerNewPositioning.
6) The MME sends a handover command Handover Command to the source base station through the S1 interface.
7) The source base station sends a handover command Handover Command to the UE.
8) The UE initiates random access Random Access to the target base station.
9) The target base station sends a random access response Random Access Response to the UE, and measures an AOA and a measured quantity Rx2-Tx2 of the UE.
10) The UE restarts an E-CID positioning measurement, that is, measures a measured quantity Rx1-Tx1 of the UE, and sends the measured quantity Rx1-Tx1 to the target base station.
11) The target base station sends the AOA, Rx1-Tx1, and Rx2-Tx2, together with position information of the target base station as well as the LPPa Transaction ID, E-SMLC UE Measurement ID, and eNB UE Measurement ID of the UE to the MME through the S1 interface.
12) The MME transparently sends, to the positioning server through an S1 interface, an E-CID measurement result as well as the LPPa Transaction ID, E-SMLC UE Measurement ID, and eNB UE Measurement ID of the UE sent by the target base station.
13) The positioning server identifies the UE that initiates the positioning service by parsing the LPPa Transaction ID, E-SMLC UE Measurement ID, and eNB UE Measurement ID, and calculates a specific position of the UE according to position information of the target base station and an E-CID measurement result.

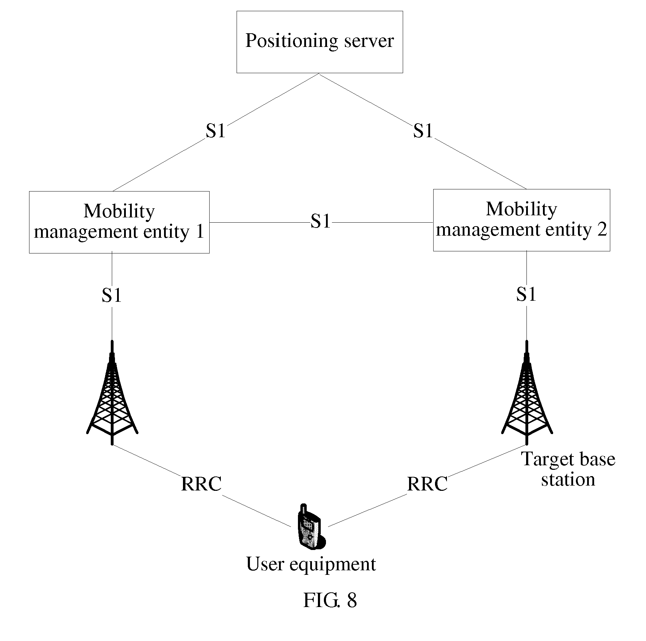

The UE positioning based on the network architecture shown in FIG. 1 is described in the foregoing. Further, as shown in FIG. 8, when a source base station and a target base station belong to different MMEs, an MME1 communicate with an MME2 through an S1 interface. Specifically, corresponding steps in FIG. 7 are substituted as follows:
1) As a substitute for step 4) in FIG. 7, the MME1 sends an HO Request to the MM2 through an S1 interface, where the HO Request also contains the E-CID positioning measurement related information originally assigned by the positioning server to the UE, including: the LPPa Transaction ID, the E-SMLC UE Measurement ID, the eNB UE Measurement ID, and the E-CID identifier.
   The MME2 sends an HO Request to the target base station through an S1 interface, where the HO Request also contains the E-CID positioning measurement related information originally assigned by the positioning server to the UE, including: the LPPa Transaction ID, the E-SMLC UE Measurement ID, the eNB UE Measurement ID, and the E-CID identifier.
   In the embodiment of the present invention, that the user identification information includes the LPPa Transaction ID, E-SMLC UE Measurement ID, and eNB UE Measurement ID of the UE is taken as an example for description. In an actual application, it is also possible that the user identification information only includes any one or any two of the three IDs. Particularly, when the user identification information includes the eNB UE Measurement ID, and includes at least one of the LPPa Transaction ID and E-SMLC UE Measurement ID, the source base station needs to bind the eNB UE Measurement ID to the LPPa Transaction ID (or to the E-SMLC UE Measurement ID, or to the LPPa Transaction ID and E-SMLC UE Measurement ID) before sending the HO Required. The embodiment of the present invention does not limit the quantity and content of the user identification information.
2) As a substitute for step 5) in FIG. 7, the target base station sends an HO Request ACK to the MME2 through the S1 interface, where the HO Request ACK is added with an indication for instructing the MME1 to cancel informing the positioning server that the UE has been handed over, and the indication is Continuous Positioning or NoTriggerNewPositioning.
   The MME2 sends an HO Request ACK to the MME1 through an S1 interface, where the HO Request ACK is added with an indication for instructing the MME1 to cancel informing the positioning server that the UE has been handed over; for example, the indication may be Continuous Positioning or NoTriggerNewPositioning.
3) As a substitute for step 11) in FIG. 7, the target base station sends the AOA, Rx1-Tx1, and Rx2-Tx2, together with position information of the target base station as well as the LPPa Transaction ID, E-SMLC UE Measurement ID, and eNB UE Measurement ID of the UE to the MME2 through the S1 interface.
4) As a substitute for step 12) in FIG. 7, the MME2 transparently sends, to the positioning server through an S1 interface, an E-CID measurement result sent by the target base station.

In the user equipment positioning method provided by the embodiment of the present invention, in the network architecture without an X2 interface between a source base station and a target base station, the source base station sends user identification information and a positioning measurement ID of the UE to the target base station through an MME, and the target base station identifies the handed over UE according to the received user identification information and performs positioning measurement. When the UE is handed over during the UE positioning measurement, positioning measurement for the UE can be initiated again after the UE is handed over to the target base station, thereby guaranteeing successful handover-based re-positioning measurement in the same E-CID process. At the same time, after the UE is handed over to the target base station, the target base station can send an indication of not notifying a positioning server to the MME, so as to prevent the MME from informing the positioning server that the UE has been handed over, thereby preventing the positioning server from triggering a new positioning process for the UE, reducing signaling overheads, and saving network resources of an access network.

### Embodiment 5

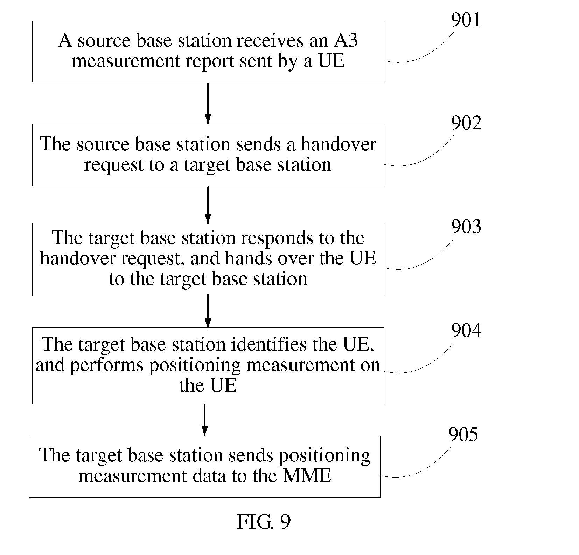

In the network architecture shown in FIG. 5, an X2 interface used for communication is present between a source base station and a target base station. As shown in FIG. 9, an embodiment of the present invention provides a user equipment positioning method based on the network architecture shown in FIG. 5. The method includes the following steps:
901: A source base station receives an A3 measurement report sent by a UE.
   An implementation manner of this step is the same as that of step 601 in FIG. 6, and details are not repeatedly described herein.
902: The source base station sends a handover request to a target base station.

After receiving the A3 measurement report sent by the UE, the source base station sends a handover request HO Request to the target base station through an X2 interface, where the HO Request carries an LPPa Transaction ID, an E-SMLC UE Measurement ID, an eNB UE Measurement ID, and an E-CID of the UE. The LPPa Transaction ID and E-SMLC UE Measurement ID are user identifiers assigned by a positioning server to the UE during the positioning measurement of the UE under the source base station; the eNB UE Measurement ID is a user identifier assigned by the source base station to the UE during the positioning measurement of the UE under the source base station; and the E-CID identifier is used to represent a positioning technology employed by the positioning server during the positioning measurement of the UE under the source base station.

A protocol format for the source base station to send the HO Request to the target base station is shown in the foregoing table 2.

903: The target base station responds to the handover request, and hands over the UE to the target base station.

When responding to the HO Request sent by the source base station, the target base station sends a path switch request (Path Switch Request) to an MME through an S1 interface, where the path switch request is added with an indication of not notifying a positioning server, and the indication of not notifying a positioning server is a continuous positioning ContinuousPositioning indication or an indication of not triggering new positioning NoTriggerNewPositioning; In an actual application, the specific name of the indication of not notifying a positioning server is not limited thereto.

At the same time, the target base station saves the LPPa Transaction ID, E-SMLC UE Measurement ID, eNB UE Measurement ID and E-CID identifier of the UE carried in the HO Request.

A protocol format for the target base station to send the path switch request is shown in the following table (table 4):

| **IE/Group Name** | **Presence** | **Range** | **IE type and reference** | **Semantics description** | **Criticality** | **Assigned Criticality** |
|---|---|---|---|---|---|---|
| Message Type | M | | 9.2.1.1 | | YES | reject |
| eNB UE S1AP ID | M | | 9.2.3.4 | | YES | reject |
| **E-RAB To Be Switched in Downlink List** | | *1* | | | YES | reject |
| **>E-RABs Switched in Downlink Item IEs** | | *1 to <maxnoof E-RABs>* | | | EACH | reject |
| >>E-RAB ID | M | | 9.2.1.2 | | - | |
| >>Transport layer address | M | | 9.2.2.1 | | - | |
| >>GTP-TEID | M | | 9.2.2.2 | To deliver DL PDUs | - | |
| Source MME UE S1AP ID | M | | 9.2.3.3 | | YES | reject |
| E-UTRAN CGI | M | | 9.2.1.38 | | YES | ignore |
| TAI | M | | 9.2.3.16 | | YES | ignore |
| UE Security Capabilities | M | | 9.2.1.40 | | YES | ignore |
| NoTriggerNewPositioning | O | | | | - | - |
| CSG Id | O | | 9.2.1.62 | | YES | ignore |
| Cell Access Mode | O | | 9.2.1.74 | | YES | ignore |
| Source MME GUMMEI | O | | 9.2.3.9 | | YES | ignore |

The NoTriggerNewPositioning indication is used as the indication of not notifying a positioning server; an item of NoTriggerNewPositioning corresponding to Presence may be set as an optional item (Optional), indicating that the flag of the item is optional. When the flag of the NoTriggerNewPositioning indication is 1, it indicates that the flag of the NoTriggerNewPositioning indication is set to canceling a positioning request.

It should be noted that NoTriggerNewPositioning and ContinuousPositioning in the embodiment of the present invention are merely two specific types of signaling in the indication of not notifying a positioning server. In an actual application, any signaling/indication having a function of instructing the MME to cancel sending a positioning request to the positioning server shall fall within the definition of the indication of not notifying a positioning server, that is, any signaling/indication that only makes simple replacement to the signaling/indication name or indication form (indication manner) and has the same function as the indication of not notifying a positioning server described in the foregoing belongs to the indication of not notifying a positioning server in the embodiment of the present invention, and such signaling/indication is not substantially different from the NoTriggerNewPositioning and ContinuousPositioning described in the foregoing.

904: The target base station identifies the UE, and performs positioning measurement on the UE.

905: The target base station sends positioning measurement data to the MME.

Implementation manners of step 904 and step 905 are the same as the implementation manners of step 605 and step 606 in FIG. 6, and details are not repeatedly described herein.

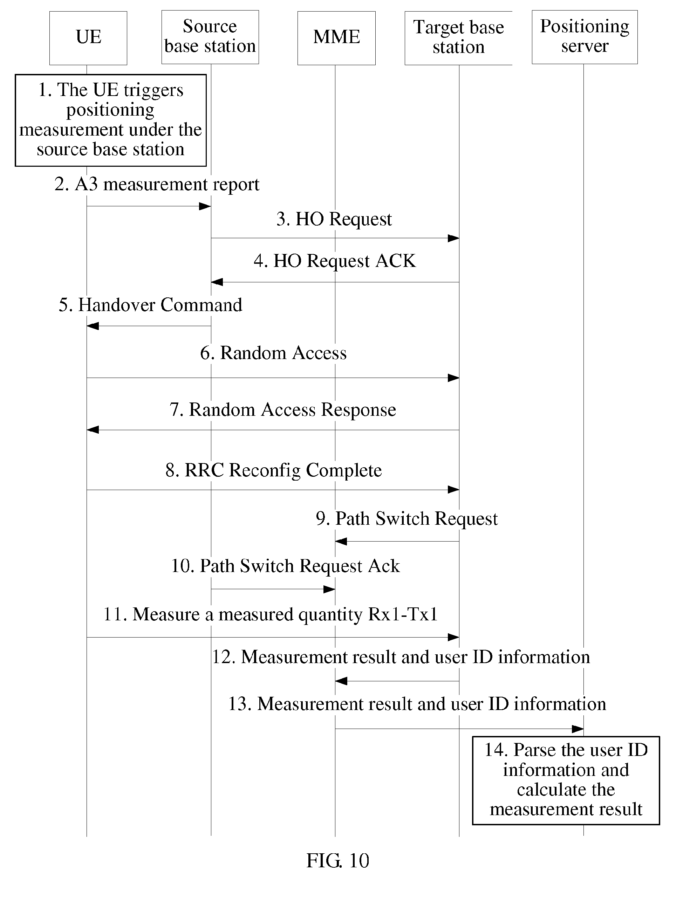

As shown in FIG. 10, in an application scenario based on the network architecture shown in FIG. 5, a signaling interworking flow among the UE, source base station, target base station, MME, and positioning server is as follows:
1) The UE triggers an E-CID positioning measurement under the source base station according to LPPa signaling and RRC signaling.
2) The UE sends an A3 measurement report to the source base station, to trigger a handover criterion.
3) The source base station sends an HO Request to the target base station through an X2 interface, where the HO Request contains E-CID positioning measurement related information originally assigned by the positioning server to the UE, including: an LPPa Transaction ID, an E-SMLC UE Measurement ID, an eNB UE Measurement ID, and an E-CID identifier.
4) The target base station sends an HO Request ACK to the source base station through the X2 interface.
5) The source base station sends a handover command Handover Command to the UE.
6) The UE initiates random access Random Access to the target base station.
7) The target base station sends a random access response Random access response to the UE, and measures an AOA and a measured quantity Rx2-Tx2 of the UE.
8) The UE sends RRC reconfiguration completion RRC Reconfig Complete to the target base station, and measures a measured quantity Rx1-Tx1,
9) The target base station sends a path switch request Path Switch Request to the MME through an S1 interface, where the request is added with an indication for instructing the MME to cancel informing the positioning server that the UE has been handed over; for example, the indication may be Continuous Positioning or NoTriggerNewPositioning.
10) The MME sends a path switch request acknowledgment Path Switch Request Ack to the target base station.
11) The UE sends the measured quantity Rx1-Tx1 to the target base station.
12) The target base station sends the AOA, Rx1-Tx1, and Rx2-Tx2, together with position information of the target base station as well as the LPPa Transaction ID, E-SMLC UE Measurement ID, and eNB UE Measurement ID of the UE to the MME through the S1 interface.
13) The MME transparently sends, to the positioning server through an S1 interface, an E-CID measurement result sent by the target base station.
14) The positioning server identifies the UE that initiates the positioning service by parsing the LPPa Transaction ID, E-SMLC UE Measurement ID, and eNB UE Measurement ID, and calculates a specific position of the UE according to position information of the target base station and an E-CID measurement result.

In the user equipment positioning method provided by the embodiment of the present invention, in the network architecture with an X2 interface between a source base station and a target base station, the source base station sends user identification information and a positioning measurement ID of the UE to the target base station through the X2 interface, and the target base station identifies the handed over UE according to the received user identification information and performs positioning measurement. When the UE is handed over during the UE positioning measurement, positioning measurement for the UE can be initiated again after the UE is handed over to the target base station, thereby guaranteeing successful handover-based re-positioning measurement in the same E-CID process. At the same time, after the UE is handed over to the target base station, the target base station can send an indication of not notifying a positioning server to the MME, so as to prevent the MME from informing the positioning server that the UE has been handed over, thereby preventing the positioning server from triggering a new positioning process for the UE, reducing signaling overheads, and saving network resources of an access network.

The base station in the embodiment is an eNB, and the positioning server is an E-SLMC.

### Embodiment 6

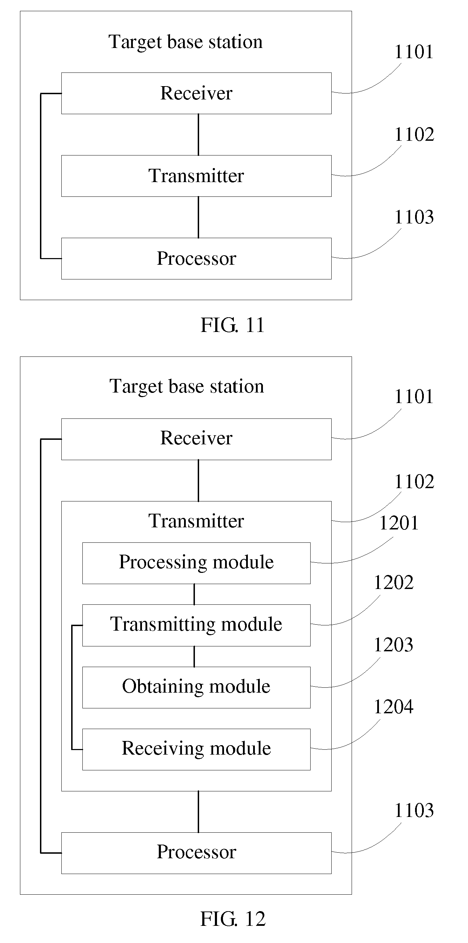

With reference to the implementation of the foregoing method embodiment, an embodiment of the present invention provides a base station, where the base station is a target base station. As shown in FIG. 11, the target base station includes: a receiver 1101, a transmitter 1102, and a processor 1103.

The receiver 1101 is configured to: during positioning measurement of a UE, when the UE needs to be handed over from a source base station to the target base station, receive user identification information of the UE, where the user identification information is used for uniquely identifying the UE.

The transmitter 1102 is configured to send an indication of not notifying a positioning server to an MME, where the indication of not notifying a positioning server is used for instructing the MME to cancel informing the positioning server that the UE has been handed over.

The processor 1103 is configured to: after the UE is handed over to the target base station, perform positioning measurement on the UE according to the user identification information received by the receiver 1101 to obtain positioning measurement data.

The transmitter 1102 is further configured to report the positioning measurement data obtained by the processor 1103 and the user identification information received by the receiver 1101 to the positioning server, so that the positioning server completes positioning the UE according to the user identification information.

Further, the receiver 1101 is specifically configured to:
receive a handover request HO Request message, where the handover request message carries the user identification information.

Further, the receiver 1101 is further specifically configured to:
receive, through an S1 interface, the handover request message sent by the MME, where the handover request message is sent by the source base station to the MME through an S1 interface; or
receive, through an X2 interface, the handover request message sent by the source base station.

Further, as shown in FIG. 12, the transmitter 1102 specifically includes: a processing module 1201, a transmitting module 1202, an obtaining module 1203, and a receiving module 1204.

The processing module 1201 is configured to set a setting option of a flag in the indication of not notifying a positioning server to be optional, and set content of the flag to canceling a positioning request.

The transmitting module 1202 is configured to send the indication of not notifying a positioning server set by the processing module 1201 to the MME through an S1 interface.

The obtaining module 1203 is configured to obtain first positioning measurement data.

The receiving module 1204 is configured to receive second positioning measurement data measured and reported by the UE under the target base station.

The transmitting module 1202 is further configured to report the first positioning measurement data obtained by the obtaining module 1203, the second positioning measurement data received by the receiving module 1204, and the user identification information received by the receiver 1101 to the positioning server.

Further, the indication of not notifying a positioning server sent by the transmitter 1102 may be a continuous positioning ContinuousPositioning indication or an indication of not triggering new positioning NoTriggerNewPositioning.

It should be noted that NoTriggerNewPositioning and ContinuousPositioning in the embodiment of the present invention are merely two specific types of signaling in the indication of not notifying a positioning server. In an actual application, any signaling/indication having a function of instructing the MME to cancel sending a positioning request to the positioning server shall fall within the definition of the indication of not notifying a positioning server, that is, any signaling/indication that only makes simple replacement to the signaling/indication name or indication form (indication manner) and has the same function as the indication of not notifying a positioning server described in the foregoing belongs to the indication of not notifying a positioning server in the embodiment of the present invention, and such signaling/indication is not substantially different from the NoTriggerNewPositioning and ContinuousPositioning described in the foregoing.

Further, the user identification information received by the receiver 1101 includes at least one type of the following information: a long term evolution positioning protocol type-A transaction ID LPPa Transaction ID, an evolved serving mobile location centre measurement ID E-SMLC UE Measurement ID, and an evolved base station user end measurement ID eNB UE Measurement ID.

In the embodiment of the present invention, that the user identification information includes the LPPa Transaction ID, E-SMLC UE Measurement ID, and eNB UE Measurement ID of the UE is taken as an example for description. In an actual application, it is also possible that the user identification information only includes any one or any two of the three IDs. Particularly, when the user identification information includes the eNB UE Measurement ID, and includes at least one of the LPPa Transaction ID and E-SMLC UE Measurement ID, the source base station needs to bind the eNB UE Measurement ID to the LPPa Transaction ID (or to the E-SMLC UE Measurement ID, or to the LPPa Transaction ID and E-SMLC UE Measurement ID). The embodiment of the present invention does not limit the quantity and content of the user identification information.

Further, the receiver 1101 is further configured to receive a positioning measurement ID of the UE, where the positioning measurement ID is an enhanced cell ID positioning method E-CID identifier.

The target base station provided by the embodiment of the present invention can obtain user identification information of a UE when the UE is handed over from a source base station to the target base station during UE positioning, performing positioning measurement again on the UE according to the user identification information after the UE is handed over to the target base station, and sending an indication of not notifying a positioning server to an MME, to prevent the MME from informing the positioning server that the UE has been handed over, thereby preventing the positioning server from retriggering a positioning process for the UE. Compared with the prior art, the embodiment of the present invention may unify positioning behaviors of the UE, target base station, and MME, thereby avoiding the repeated positioning measurement of the UE under the target base station, and saving the signaling amount of an air interface and network resources of an access network.

### Embodiment 7

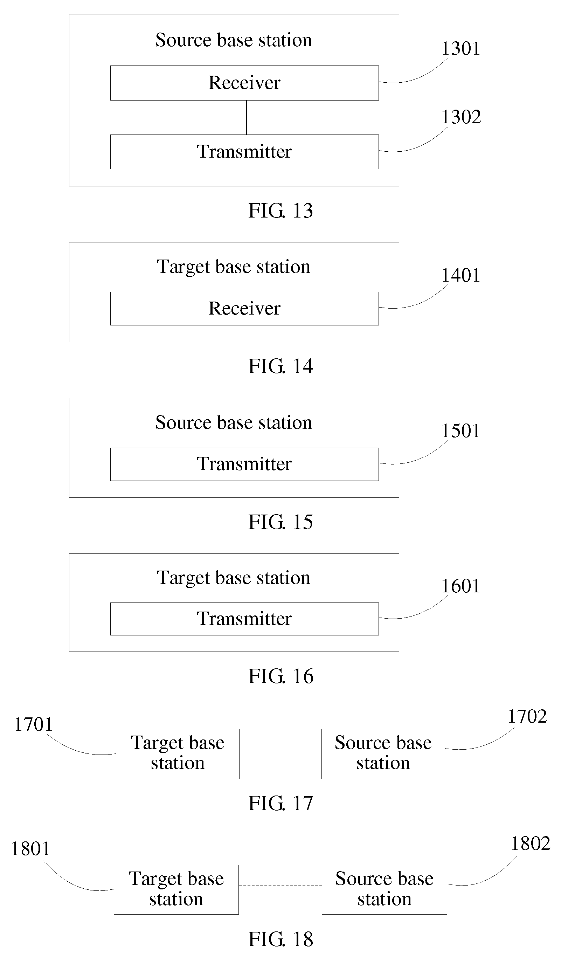

With reference to the implementation of the foregoing method embodiment, an embodiment of the present invention provides a base station, where the base station is a source base station. As shown in FIG. 13, the source base station includes: a receiver 1301 and a transmitter 1302.

The receiver 1301 is configured to: during positioning measurement of a UE, when the UE needs to be handed over from the source base station to a target base station, receive an A3 measurement report sent by the UE, where the A3 measurement report is used by the UE to request a handover from the source base station.

The transmitter 1302 is configured to send user identification information of the UE to the target base station, so that the target base station performs positioning measurement on the UE after the UE is handed over to the target base station, where the user identification information is used for uniquely identifying the UE.

Further, the transmitter 1302 is specifically configured to send a handover request HO Request message to the target base station, where the handover request message carries the user identification information.

Further, the transmitter 1302 is specifically configured to:
send a handover required HO Required message to an MME through an S1 interface, where the handover required message carries the user identification information, and the MME sends the handover request message to the target base station through an S1 interface; and
send the handover request message to the target base station through an X2 interface.

Further, the user identification information sent by the transmitter 1302 includes at least one type of the following information: a long term evolution positioning protocol type-A transaction ID LPPa Transaction ID, an evolved serving mobile location centre measurement ID E-SMLC UE Measurement ID, and an evolved base station user end measurement ID eNB UE Measurement ID.

In the embodiment of the present invention, that the user identification information includes the LPPa Transaction ID, E-SMLC UE Measurement ID, and eNB UE Measurement ID of the UE is taken as an example for description. In an actual application, it is also possible that the user identification information only includes any one or any two of the three IDs. Particularly, when the user identification information includes the eNB UE Measurement ID, and includes at least one of the LPPa Transaction ID and E-SMLC UE Measurement ID, the source base station needs to bind the eNB UE Measurement ID to the LPPa Transaction ID (or to the E-SMLC UE Measurement ID, or to the LPPa Transaction ID and E-SMLC UE Measurement ID). The embodiment of the present invention does not limit the quantity and content of the user identification information.

Further, the transmitter 1302 is further configured to send a positioning measurement ID of the UE to the target base station, where the positioning measurement ID is an enhanced cell ID positioning method E-CID identifier.

The source base station provided by the embodiment of the present invention can send user identification information of a UE to a target base station when the UE is handed over from the source base station to the target base station during UE positioning, so that the target base station performs positioning measurement again on the UE according to the user identification information after the UE is handed over to the target base station and sends an indication of not notifying a positioning server to an MME, to prevent the MME from informing the positioning server that the UE has been handed over, thereby preventing the positioning server from retriggering a positioning process for the UE. Compared with the prior art, the embodiment of the present invention may unify positioning behaviors of the UE, target base station, and MME, thereby avoiding the repeated positioning measurement of the UE under the target base station, and saving the signaling amount of an air interface and network resources of an access network.

### Embodiment 8

With reference to the implementation of the foregoing method embodiment, an embodiment of the present invention provides a base station, where the base station is a target base station. As shown in FIG. 14, the target base station includes:
a receiver 1402, configured to: during positioning measurement of a UE, when the UE needs to be handed over from a source base station to the target base station, receive, through an X2 interface, user identification information and/or a positioning measurement ID sent by the source base station; or receive, through an S1 interface, the user identification information and/or the positioning measurement ID sent by an MME; and
where the user identification information includes at least one type of the following information: a long term evolution positioning protocol type-A transaction ID LPPa Transaction ID, an evolved serving mobile location centre measurement ID E-SMLC UE Measurement ID, and an evolved base station user end measurement ID eNB UE Measurement ID; and
the positioning measurement ID is an enhanced cell ID positioning method E-CID identifier. In the embodiment of the present invention, that the user identification information includes the LPPa Transaction ID, E-SMLC UE Measurement ID, and eNB UE Measurement ID of the UE is taken as an example for description. In an actual application, it is also possible that the user identification information only includes any one or any two of the three IDs. Particularly, when the user identification information includes the eNB UE Measurement ID, and includes at least one of the LPPa Transaction ID and E-SMLC UE Measurement ID, the source base station needs to bind the eNB UE Measurement ID to the LPPa Transaction ID (or to the E-SMLC UE Measurement ID, or to the LPPa Transaction ID and E-SMLC UE Measurement ID). The embodiment of the present invention does not limit the quantity and content of the user identification information.

The target base station provided by the embodiment of the present invention can receive, through an X2 interface, user identification information and/or a positioning measurement ID sent by a source base station, or receive, through an S1 interface, the user identification information and/or the positioning measurement ID sent by the MME, so that the target base station performs positioning measurement again on the UE according to the user identification information and/or the positioning measurement ID after the UE is handed over to the target base station.

### Embodiment 9

With reference to the implementation of the foregoing method embodiment, an embodiment of the present invention provides a base station, where the base station is a source base station. As shown in FIG. 15, the source base station includes:
a transmitter 1501, configured to: during positioning measurement of a UE, when the UE needs to be handed over from the source base station to a target base station, send, through an X2 interface, user identification information and/or a positioning measurement ID to the target base station; or send, through an S1 interface, the user identification information and/or the positioning measurement ID to an MME, so that the MME sends the user identification information and/or the positioning measurement ID to the target base station through an S1 interface,
where the user identification information includes at least one type of the following information: a long term evolution positioning protocol type-A transaction ID LPPa Transaction ID, an evolved serving mobile location centre measurement ID E-SMLC UE Measurement ID, and an evolved base station user end measurement ID eNB UE Measurement ID; and
the positioning measurement ID is an enhanced cell ID positioning method E-CID identifier.

In the embodiment of the present invention, that the user identification information includes the LPPa Transaction ID, E-SMLC UE Measurement ID, and eNB UE Measurement ID of the UE is taken as an example for description. In an actual application, it is also possible that the user identification information only includes any one or any two of the three IDs. Particularly, when the user identification information includes the eNB UE Measurement ID, and includes at least one of the LPPa Transaction ID and E-SMLC UE Measurement ID, the source base station needs to bind the eNB UE Measurement ID to the LPPa Transaction ID (or to the E-SMLC UE Measurement ID, or to the LPPa Transaction ID and E-SMLC UE Measurement ID). The embodiment of the present invention does not limit the quantity and content of the user identification information.

The source base station provided by the embodiment of the present invention can send, through an X2 interface, user identification information and/or a positioning measurement ID to a target base station, or send, through an S1 interface, the user identification information and/or the positioning measurement ID to an MME, where the MME sends the user identification information and/or the positioning measurement ID to the target base station through an S1 interface, so that the target base station performs positioning measurement again on the UE according to the user identification information and/or the positioning measurement ID after the UE is handed over to the target base station.

### Embodiment 10

With reference to the implementation of the foregoing method embodiment, an embodiment of the present invention provides a base station, where the base station is a target base station. As shown in FIG. 16, the target base station includes:
a transmitter 1601, configured to: during positioning measurement of a UE, after the UE is handed over from a source base station to the target base station, send an indication of not notifying a positioning server to an MME, where the indication of not notifying a positioning server is used for instructing the MME to cancel informing the positioning server that the UE has been handed over,
where the indication of not notifying a positioning server may be a continuous positioning ContinuousPositioning indication or an indication of not triggering new positioning NoTriggerNewPositioning.

It should be noted that NoTriggerNewPositioning and ContinuousPositioning in the embodiment of the present invention are merely two specific types of signaling in the indication of not notifying a positioning server. In an actual application, any signaling/indication having a function of instructing the MME to cancel sending a positioning request to the positioning server shall fall within the definition of the indication of not notifying a positioning server, that is, any signaling/indication that only makes simple replacement to the signaling/indication name or indication form (indication manner) and has the same function as the indication of not notifying a positioning server described in the foregoing belongs to the indication of not notifying a positioning server in the embodiment of the present invention, and such signaling/indication is not substantially different from the NoTriggerNewPositioning and ContinuousPositioning described in the foregoing.

The target base station provided by the embodiment of the present invention can send a positioning request cancellation indication to an MME after the UE is handed over to the target base station, so as to prevent the MME from informing a positioning server that the UE has been handed over, thereby preventing the positioning server from triggering a new positioning process for the UE, and saving the signaling amount on an air interface and network resources of an access network.

### Embodiment 11

With reference to the implementation of the foregoing method and apparatus embodiments, an embodiment of the present invention provides a user equipment positioning system. As shown in FIG. 17, the system includes:
the target base station 1701 according to Embodiment 6 and the source base station 1702 according to Embodiment 7.

In the user equipment positioning system provided by the embodiment of the present invention, a target base station obtains user identification information of a UE when the UE is handed over from a source base station to the target base station during UE positioning; after the UE is handed over to the target base station, the target base station performs positioning measurement again on the UE according to the user identification information, and sends an indication of not notifying a positioning server to an MME, to prevent the MME from informing the positioning server that the UE has been handed over, thereby preventing the positioning server from retriggering a positioning process for the UE. Compared with the prior art, the embodiment of the present invention may unify positioning behaviors of the UE, target base station, and MME, thereby avoiding the repeated positioning measurement of the UE under the target base station, and saving the signaling amount of an air interface and network resources of an access network.

### Embodiment 12

With reference to the implementation of the foregoing method and apparatus embodiments, an embodiment of the present invention further provides a user equipment positioning system. As shown in FIG. 18, the system includes:

The target base station 1801 according to Embodiment 8 and Embodiment 10 and the source base station 1802 according to Embodiment 9.

In the user equipment positioning system provided by the embodiment of the present invention, user identification information and/or a positioning measurement ID is sent to a target base station through an X2 interface, or the user identification information and/or the positioning measurement ID is sent to an MME through an S1 interface, and the MME sends the user identification information and/or the positioning measurement ID to the target base station through an S1 interface, so that the target base station performs positioning measurement again on the UE according to the user identification information and/or the positioning measurement ID after the UE is handed over to the target base station.

Further, in the user equipment positioning system provided by the embodiment of the present invention, the target base station sends a positioning request cancellation indication to the UE after the UE is handed over to the target base station, so as to prevent the MME from requesting the positioning server to perform positioning measurement on the UE repeatedly, thereby saving the signaling amount of an air interface and network resources of an access network.

The base station in the foregoing embodiments includes but is not limited to an eNB, and the embodiment of the present invention is not limited thereto.

### Embodiment 13

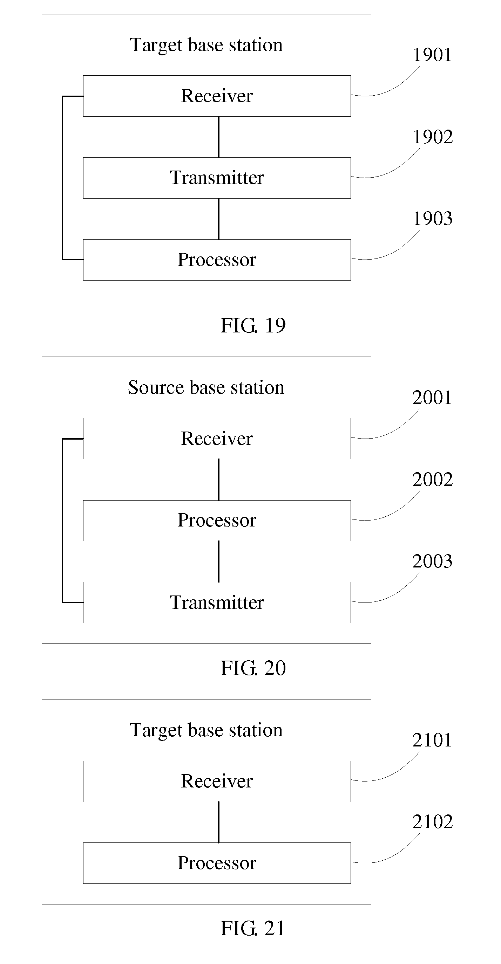

With reference to the implementation of the foregoing method embodiment, an embodiment of the present invention provides a base station, where the base station is a target base station. As shown in FIG. 19, the target base station includes: a receiver 1901, a transmitter 1902, and a processor 1903.

The receiver 1901 is configured to: during positioning measurement of a UE, when the UE needs to be handed over from a source base station to the target base station, receive user identification information of the UE, where the user identification information is used for uniquely identifying the UE.

The transmitter 1902 is configured to send an indication of not notifying a positioning server to an MME, where the indication of not notifying a positioning server is used for instructing the MME to cancel informing the positioning server that the UE has been handed over.

The processor 1903 is configured to: after the UE is handed over to the target base station, perform positioning measurement on the UE according to the user identification information received by the receiver 1901 to obtain positioning measurement data.

The transmitter 1902 is further configured to report the positioning measurement data obtained by the processor 1903 and the user identification information received by the receiver 1901 to a positioning server.

Further, the receiver 1901 is specifically configured to:
receive a handover request HO Request message, where the handover request message carries the user identification information.

Further, the receiver 1901 is further configured to:
receive, through an S1 interface, the handover request message sent by the MME, where the handover request message is sent by the source base station to the MME through an S1 interface; or
receive, through an X2 interface, the handover request message sent by the source base station.

Further, the transmitter 1902 is specifically configured to:
set a setting option of a flag in the indication of not notifying a positioning server to be optional, and set content of the flag to canceling a positioning request; and
send the set indication of not notifying a positioning server to the MME through an S1 interface.

Further, the transmitter 1902 is further specifically configured to:
obtain first positioning measurement data;
receive second positioning measurement data measured and reported by the UE under the target base station; and
report the first positioning measurement data, the second positioning measurement data, and the user identification information to the positioning server.

Further, the indication of not notifying a positioning server sent by the transmitter 1902 may be a continuous positioning indication or an indication of not triggering new positioning.

Further, the user identification information received by the receiver 1901 includes at least one type of the following information:
a long term evolution positioning protocol type-A transaction ID LPPa Transaction ID, an evolved serving mobile location centre measurement ID E-SMLC UE Measurement ID, and an evolved base station user end measurement ID eNB UE Measurement ID.

Further, the receiver 1901 is also configured to:
receive a positioning measurement ID of the UE, where the positioning measurement ID is an enhanced cell ID positioning method E-CID identifier.

The target base station provided by the embodiment of the present invention can obtain user identification information of a UE when the UE is handed over from a source base station to the target base station during UE positioning, performing positioning measurement again on the UE according to the user identification information after the UE is handed over to the target base station, and sending an indication of not notifying a positioning server to an MME, to prevent the MME from informing the positioning server that the UE has been handed over, thereby preventing the positioning server from retriggering a positioning process for the UE. Compared with the prior art, the embodiment of the present invention may unify positioning behaviors of the UE, target base station, and MME, thereby avoiding the repeated positioning measurement of the UE under the target base station, and saving the signaling amount of an air interface and network resources of an access network.

### Embodiment 14

With reference to the implementation of the foregoing method embodiment, an embodiment of the present invention provides a base station, where the base station is a source base station. As shown in FIG. 20, the source base station includes: a receiver 2001, a processor 2002, and a transmitter 2003.

The receiver 2001 is configured to: during positioning measurement of a UE, when the UE needs to be handed over from the source base station to a target base station, receive an A3 measurement report sent by the UE, where the A3 measurement report is used by the UE to request a handover from the source base station.

The processor 2002 is configured to process a handover request of the UE according to the A3 measurement report received by the receiver 2001.

The processor 2002 is further configured to obtain user identification information of the UE.

The transmitter 2003 is configured to send the user identification information of the UE obtained by the processor 2002 to the target base station, so that the target base station performs positioning measurement on the UE after the UE is handed over to the target base station, where the user identification information is used for uniquely identifying the UE.

Further, the transmitter 2003 is specifically configured to:
send a handover request HO Request message to the target base station, where the handover request message carries the user identification information obtained by the processor 2002.

Further, the transmitter 2003 is further specifically configured to:
send a handover required HO Required message to an MME through an S1 interface, where the handover required message carries the user identification information obtained by the processor, and the MME sends the handover request message to the target base station through an S1 interface; and
send the handover request message to the target base station through an X2 interface.

Further, the user identification information sent by the transmitter 2003 includes at least one type of the following information:
a long term evolution positioning protocol type-A transaction ID LPPa Transaction ID, an evolved serving mobile location centre measurement ID E-SMLC UE Measurement ID, and an evolved base station user end measurement ID eNB UE Measurement ID.

Further, the processor 2002 is further configured to obtain a positioning measurement ID of the UE.

The transmitter 2003 is further configured to send the positioning measurement ID of the UE obtained by the processor 2002 to the target base station, where the positioning measurement ID is an enhanced cell ID positioning method E-CID identifier.

The source base station provided by the embodiment of the present invention can send user identification information of a UE to a target base station when the UE is handed over from the source base station to the target base station during UE positioning, so that the target base station performs positioning measurement again on the UE according to the user identification information after the UE is handed over to the target base station and sends an indication of not notifying a positioning server to an MME, to prevent the MME from informing the positioning server that the UE has been handed over, thereby preventing the positioning server from retriggering a positioning process for the UE. Compared with the prior art, the embodiment of the present invention may unify positioning behaviors of the UE, target base station, and MME, thereby avoiding the repeated positioning measurement of the UE under the target base station, and saving the signaling amount of an air interface and network resources of an access network.

### Embodiment 15

With reference to the implementation of the foregoing method embodiment, an embodiment of the present invention provides a base station, where the base station is a target base station. As shown in FIG. 21, the target base station includes: a receiver 2101 and a processor 2102.

The receiver 2101 is configured to: during positioning measurement of a UE, when the UE needs to be handed over from a source base station to the target base station, receive, through an X2 interface, user identification information and/or a positioning measurement ID sent by the source base station; or receive, through an S1 interface, the user identification information and/or the positioning measurement ID sent by a mobility management entity MME.

The processor 2102 is configured to identify the UE according to the user identification information received by the receiver 2101, and perform positioning measurement on the UE according to the positioning measurement ID received by the receiver.

The user identification information includes at least one type of the following information: a long term evolution positioning protocol type-A transaction ID LPPa Transaction ID, an evolved serving mobile location centre measurement ID E-SMLC UE Measurement ID, and an evolved base station user end measurement ID eNB UE Measurement ID.

The positioning measurement ID is an enhanced cell ID positioning method E-CID identifier.

The target base station provided by the embodiment of the present invention can receive, through an X2 interface, user identification information and/or a positioning measurement ID sent by a source base station, or receive, through an S1 interface, the user identification information and/or the positioning measurement ID sent by the MME, so that the target base station performs positioning measurement again on the UE according to the user identification information and/or the positioning measurement ID after the UE is handed over to the target base station.

### Embodiment 16

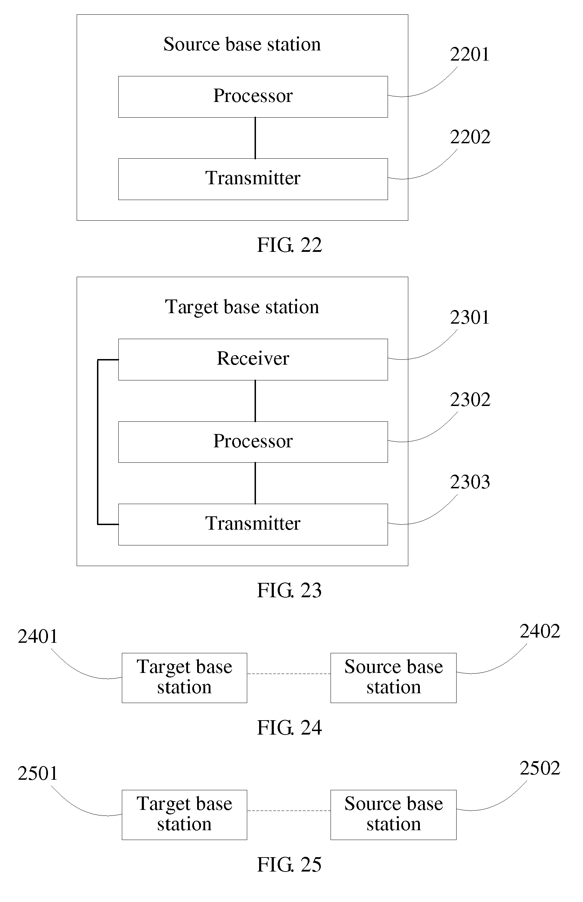

With reference to the implementation of the foregoing method embodiment, an embodiment of the present invention provides a base station, where the base station is a source base station. As shown in FIG. 22, the source base station includes: a processor 2201 and a transmitter 2202.

The processor 2201 is configured to: during positioning measurement of a UE, when the UE needs to be handed over from the source base station to a target base station, obtain user identification information and/or a positioning measurement ID of the UE, where the positioning measurement ID is used for identifying a positioning measurement technology.

The transmitter 2202 is configured to send, through an X2 interface, the user identification information and/or the positioning measurement ID obtained by the processor 2201 to the target base station; or send, through an S1 interface, the user identification information and/or the positioning measurement ID obtained by the processor 2201 to an MME, so that the MME sends the user identification information and/or the positioning measurement ID to the target base station through an S1 interface.

The user identification information includes at least one type of the following information: a long term evolution positioning protocol type-A transaction ID LPPa Transaction ID, an evolved serving mobile location centre measurement ID E-SMLC UE Measurement ID, and an evolved base station user end measurement ID eNB UE Measurement ID.

The positioning measurement ID is an enhanced cell ID positioning method E-CID identifier.

The source base station provided by the embodiment of the present invention can send, through an X2 interface, user identification information and/or a positioning measurement ID to a target base station, or send, through an S1 interface, the user identification information and/or the positioning measurement ID to an MME, where the MME sends the user identification information and/or the positioning measurement ID to the target base station through an S1 interface, so that the target base station performs positioning measurement again on the UE according to the user identification information and/or the positioning measurement ID after the UE is handed over to the target base station.

### Embodiment 17

With reference to the implementation of the foregoing method embodiment, an embodiment of the present invention provides a base station, where the base station is a target base station. As shown in FIG. 23, the target base station includes: a receiver 2301, a processor 2302, and a transmitter 2303.

The receiver 2301 is configured to: during positioning measurement of a UE, after the UE is handed over from a source base station to the target base station, receive user identification information and/or a positioning measurement ID sent by the source base station.

The processor 2302 is configured to determine to send an indication of not notifying a positioning server to an MME according to the user identification information and/or the positioning measurement ID received by the receiver 2301.

The transmitter 2303 is configured to send an indication of not notifying a positioning server to the MME, where the indication of not notifying a positioning server is used for instructing the MME to cancel informing the positioning server that the UE has been handed over.

The indication of not notifying a positioning server is a continuous positioning indication or an indication of not triggering new positioning.

The target base station provided by the embodiment of the present invention can send a positioning request cancellation indication to an MME after the UE is handed over to the target base station, so as to prevent the MME from informing a positioning server that the UE has been handed over, thereby preventing the positioning server from triggering a new positioning process for the UE, and saving the signaling amount on an air interface and network resources of an access network.

### Embodiment 18

With reference to the implementation of the foregoing method and apparatus embodiments, an embodiment of the present invention provides a user equipment positioning system. As shown in FIG. 24, the system includes: the target base station 2401 according to Embodiment 13 and the source base station 2402 according to Embodiment 14.

In the user equipment positioning system provided by the embodiment of the present invention, a target base station obtains user identification information of a UE when the UE is handed over from a source base station to the target base station during UE positioning; after the UE is handed over to the target base station, the target base station performs positioning measurement again on the UE according to the user identification information, and sends an indication of not notifying a positioning server to an MME, to prevent the MME from informing the positioning server that the UE has been handed over, thereby preventing the positioning server from retriggering a positioning process for the UE. Compared with the prior art, the embodiment of the present invention may unify positioning behaviors of the UE, target base station, and MME, thereby avoiding the repeated positioning measurement of the UE under the target base station, and saving the signaling amount of an air interface and network resources of an access network.

### Embodiment 19

With reference to the implementation of the foregoing method and apparatus embodiments, an embodiment of the present invention provides a user equipment positioning system. As shown in FIG. 25, the system includes: the target base station 2501 according to Embodiment 15 or Embodiment 17 and the source base station 2502 according to Embodiment 16.

In the user equipment positioning system provided by the embodiment of the present invention, user identification information and/or a positioning measurement ID is sent to a target base station through an X2 interface, or the user identification information and/or the positioning measurement ID is sent to an MME through an S1 interface, and the MME sends the user identification information and/or the positioning measurement ID to the target base station through an S1 interface, so that the target base station performs positioning measurement again on the UE according to the user identification information and/or the positioning measurement ID after the UE is handed over to the target base station.

Further, in the user equipment positioning system provided by the embodiment of the present invention, the target base station sends a positioning request cancellation indication to the UE after the UE is handed over to the target base station, so as to prevent the MME from requesting the positioning server to perform positioning measurement on the UE repeatedly, thereby saving the signaling amount of an air interface and network resources of an access network.

The base station in the foregoing embodiments includes but is not limited to an eNB, and the embodiment of the present invention is not limited thereto.

A person skilled in the art may clearly understand that, for the purpose of convenient and brief description, dividing of the foregoing functional modules is taken as an example for description, in actual implementation, the foregoing functions may be allocated to different modules and implemented according to a requirement, that is, inner structure of the apparatus is divided into different functional modules to implement all or a part of the functions described in the foregoing. For a detailed working process of the foregoing system, apparatus and unit, reference may be made to the corresponding process in the foregoing method embodiments, and details are not repeatedly described herein.

In the several embodiments provided in the present application, it should be understood that the disclosed system, apparatus, and method may be implemented in other manners. For example, the described apparatus embodiment is merely exemplary. For example, dividing of the units is merely a type of logical function dividing, and there may be other dividing manners during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, and two or more units may also be integrated into one unit. The integrated unit may be implemented in a form of hardware, and may also be implemented in a form of a software functional unit.

When the integrated unit are implemented in a form of a software functional unit and sold or used as an independent product, the integrated unit may be stored in a computer-readable storage medium. Based on such understanding, the technical solutions of the present invention essentially, or the part contributing to the prior art, or all or a part of the technical solutions may be embodied in a form of a software product. The computer software product is stored in a storage medium, and includes several instructions for instructing a computer device (which may be a personal computer, a server, or a network device, or the like) or a processor (processor) to perform all or a part of the steps of the methods described in the embodiments of the present invention. The foregoing storage medium includes: any medium that is capable of storing program code, such as a USB flash drive, a mobile hard disk, a read-only memory (Read-Only Memory, ROM), a random access memory (Random Access Memory, RAM), a magnetic disk, or an optical disc.

The foregoing description is merely specific implementation manners of the present invention, but is not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A user equipment positioning method, comprising:
during positioning measurement of a user equipment, UE, between a source node and the user equipment when the UE needs to be handed over from the source node to a target node, receiving, by the target node, user identification information of the UE sent by the source node (201; 302; 401; 402), wherein the user identification information is used for uniquely identifying the UE;
sending, by the target node, an indication of not notifying a positioning server to a mobility management entity, MME, wherein the indication of not notifying a positioning server is used for instructing the MME to cancel informing the positioning server that the UE has been handed over; and
after the UE is handed over to the target node, performing, by the target node, positioning measurement on the UE according to the user identification information, and reporting obtained positioning measurement data and the user identification information to the positioning server (204; 606; 905).

2. The method according to claim 1, wherein the receiving, by the target node, user identification information of the UE specifically comprises:
receiving, by the target node, a handover request, HO Request, message, wherein the handover request message carries the user identification information.

3. The method according to claim 2, wherein the receiving, by the target node, a handover request HO Request message specifically comprises:
receiving through an S1 interface, by the target node, the handover request message sent by the MME, wherein the handover request message is sent to the MME by the source node through an S1 interface; or
receiving through an X2 interface, by the target node, the handover request message sent by the source node.

4. The method according to claim 3, wherein the sending, by the target node, an indication of not notifying a positioning server to a mobility management entity, MME, specifically comprises:
setting, by the target node, a setting option of a flag in the indication of not notifying a positioning server to be optional;
setting, by the target node, content of the flag to canceling a positioning request; and
sending, by the target node, the set indication of not notifying a positioning server to the MME through an S1 interface.

5. The method according to claim 4, wherein the reporting obtained positioning measurement data and the user identification information to the positioning server specifically comprises:
obtaining, by the target node, first positioning measurement data, and receiving second positioning measurement data measured and reported by the UE under the target node; and
reporting, by the target node, the first positioning measurement data, the second positioning measurement data, and the user identification information to the positioning server (204).

6. The method according to any one of claims 1 to 5, wherein the indication of not notifying a positioning server is a continuous positioning indication or an indication of not triggering new positioning.

7. The method according to any one of claims 1 to 6, wherein the user identification information comprises at least one type of the following information:
a long term evolution positioning protocol type-A transaction ID, LPPa Transaction ID, an evolved serving mobile location centre measurement ID,E-SMLC UE Measurement ID, and an evolved base station user end measurement ID, eNB UE Measurement ID.

8. The method according to any one of claims 1 to 7, wherein during the receiving, by the target node, user identification information of the UE, the method further comprises:
receiving, by the target node, a positioning measurement ID of the UE, wherein the positioning measurement ID is an enhanced cell ID positioning method, E-CID, identifier.

## Patentansprüche

1. Verfahren zur Bestimmung der Position einer Benutzereinrichtung, umfassend:
Empfangen durch einen Zielknoten während einer Positionsbestimmungsmessung einer Benutzereinrichtung, UE, zwischen einem Ursprungsknoten und der Benutzereinrichtung, wenn die UE vom Ursprungsknoten an den Zielknoten weitergereicht werden muss, von Benutzeridentifikationsinformationen der UE, die vom Ursprungsknoten (201; 302; 401; 402) gesendet werden, wobei die Benutzeridentifikationsinformationen zum eindeutigen Identifizieren der UE verwendet werden;
Senden durch den Zielknoten einer Anzeige des Nichtbenachrichtigens eines Positionsbestimmungsservers an eine Mobilverwaltungsinstanz, MME, wobei die Anzeige des Nichtbenachrichtigens eines Positionsbestimmungsservers verwendet wird, um die MME anzuweisen, das Informieren des Positionsbestimmungsservers darüber, dass die UE weitergereicht wurde, zu annullieren; und
Durchführen durch den Zielknoten nach der Weiterreichung der UE an den Zielknoten von Positionsbestimmungsmessung über die UE gemäß den Benutzeridentifikationsinformationen und Melden der beschafften Positionsbestimmungsmessdaten und der Benutzeridentifikationsinformationen an den Positionsbestimmungsserver (204; 606; 905).

2. Verfahren nach Anspruch 1, wobei das Empfangen durch den Zielknoten von Benutzeridentifikationsinformationen der UE insbesondere umfasst:
Empfangen durch den Zielknoten einer Weiterreichungsanforderungsnachricht, HO-Anforderungsnachricht, wobei die Weiterreichungsanforderungsnachricht die Benutzeridentifikationsinformationen mitführt.

3. Verfahren nach Anspruch 2, wobei das Empfangen durch den Zielknoten einer Weiterreichungsanforderungs- bzw. HO-Anforderungsnachricht insbesondere umfasst:
Empfangen durch den Zielknoten der von der MME gesendeten Weiterreichungsanforderungsnachricht durch eine S1-Schnittstelle, wobei die Weiterreichungsanforderungsnachricht vom Ursprungsknoten durch eine S1-Schnittstelle an die MME gesendet wird; oder
Empfangen durch den Zielknoten der vom Ursprungsknoten gesendeten Weiterreichungsanforderungsnachricht durch eine X2-Schnittstelle.

4. Verfahren nach Anspruch 3, wobei das Senden durch den Zielknoten einer Anzeige des Nichtbenachrichtigens eines Positionsbestimmungsservers an eine Mobilverwaltungsinstanz, MME, insbesondere umfasst:
Setzen durch den Zielknoten einer Setzoption eines Flags in der Anzeige des Nichtbenachrichtigens eines Positionsservers auf optional;
Setzen durch den Zielknoten des Inhalts des Flags auf Annullieren einer Positionsbestimmungsanforderung; und
Senden durch den Zielknoten der Setzanzeige des Nichtbenachrichtigens eines Positionsbestimmungsservers durch eine S1-Schnittstelle an die MME.

5. Verfahren nach Anspruch 4, wobei das Melden der beschafften Positionsbestimmungsmessdaten und der Benutzeridentifikationsinformationen an den Positionsserver insbesondere umfasst:
Beschaffen durch den Zielknoten von ersten Positionsbestimmungsmessdaten und Empfangen von zweiten Positionsbestimmungsmessdaten, die durch die UE gemäß dem Zielknoten gemessen und gemeldet werden; und
Melden durch den Zielknoten der ersten Positionsbestimmungsmessdaten, der zweiten Positionsbestimmungsmessdaten und der Benutzeridentifikationsinformationen an den Positionsbestimmungsserver (204).

6. Verfahren nach einem der Ansprüche 1 bis 5, wobei die Anzeige des Nichtbenachrichtigens eines Positionsbestimmungsservers eine kontinuierliche Positionsbestimmungsanzeige oder eine Anzeige des Nichtauslösens einer neuen Positionsbestimmung ist.

7. Verfahren nach einem der Ansprüche 1 bis 6, wobei die Benutzeridentifikationsinformationen mindestens einen Typ der folgenden Informationen umfassen:
eine Transaktions-ID eines LTE (Long Term Evolution)-Positionsbestimmungsprotokolls vom Typ A, LPPa-Transaktions-ID, eine Messungs-ID einer evolvierten versorgenden Mobiltelefonlokalisierungszentrale, E-SMLC-UE-Measurement-ID, und eine Benutzer-Ende-Messungs-ID einer evolvierten Basisstation, eNB-UE-Measurement-ID.

8. Verfahren nach einem der Ansprüche 1 bis 7, wobei während des Empfangens von Benutzeridentifikationsinformationen der UE durch den Zielknoten das Verfahren ferner umfasst:
Empfangen durch den Zielknoten einer Positionsbestimmungsmessungs-ID der UE, wobei die Positionsbestimmungsmessungs-ID eine Kennung eines Enhanced-Cell-ID-Positionsbestimmungsverfahrens, E-CID, ist.

## Revendications

1. Procédé de positionnement d'un équipement utilisateur comprenant :
la réception par un noeud cible d'informations d'identification d'un utilisateur d'équipement utilisateur UE, envoyées par un noeud source (201 ; 302 ; 401 ; 402), pendant une mesure de positionnement d'un équipement utilisateur, UE, situé entre le noeud source et l'équipement utilisateur, lorsque l'équipement utilisateur UE doit subir un transfert de communication depuis le noeud source vers le noeud cible, les informations d'indentification d'utilisateur étant utilisées pour identifier de manière unique l'équipement utilisateur UE,
l'envoi, par le noeud cible, d'une indication de non-notification d'un serveur de positionnement à une entité de gestion de mobilité, MME, l'indication de non-notification d'un serveur de positionnement étant utilisée pour ordonner à l'entité MME d'annuler l'information faite au serveur de positionnement concernant le fait que l'équipement utilisateur UE a subi un transfert de communication, et
l'exécution, par le noeud cible, après le transfert de communication de l'équipement utilisateur UE vers le noeud cible, d'une mesure de positionnement sur l'équipement utilisateur UE en fonction des informations d'indentification d'utilisateur, et le rapport des données de mesure de positionnement obtenues et des informations d'indentification d'utilisateur au serveur de positionnement (204 ; 606 ; 905).

2. Procédé selon la revendication 1, dans lequel la réception, par le noeud cible, d'informations d'indentification d'utilisateur de l'équipement utilisateur UE comprend en particulier :
la réception, par le noeud cible, d'un message de demande de transfert de communication, ou demande HO, le message de demande de transfert de communication transportant les informations d'indentification d'utilisateur.

3. Procédé selon la revendication 2, dans lequel la réception, par le noeud cible, d'un message de demande de transfert de communication, ou demande HO, comprend en particulier :
la réception par le noeud cible, par l'intermédiaire d'une interface de type S1, du message de demande de transfert de communication envoyé par l'entité MME, le message de demande de transfert de communication étant envoyé à l'entité MME par le noeud source au travers d'une interface de type S1, ou
la réception par le noeud cible, par l'intermédiaire d'une interface de type X2, du message de demande de transfert de communication envoyé par le noeud source.

4. Procédé selon la revendication 3, dans lequel l'envoi, par le noeud cible, d'une indication de non-notification d'un serveur de positionnement à une entité de gestion de mobilité, MME, comprend en particulier :
l'établissement, par le noeud cible, d'une option de positionnement d'un drapeau situé dans l'indication de non-notification d'un serveur de positionnement pour qu'elle soit optionnelle,
l'établissement, par le noeud cible, d'un contenu du drapeau permettant d'annuler une demande de positionnement, et
l'envoi, par le noeud cible, de l'indication établie de non-notification d'un serveur de positionnement à l'entité MME par l'intermédiaire d'une interface de type S1.

5. Procédé selon la revendication 4, dans lequel le rapport fait au serveur de positionnement concernant les données de mesure de positionnement obtenues et les informations d'indentification d'utilisateur comprend en particulier :
la récupération, par le noeud cible, de premières données de mesure de positionnement, et la réception de secondes données de mesure de positionnement mesurées et rapportées par l'équipement utilisateur UE sous le noeud cible, et
le rapport fait au serveur de positionnement (204), par le noeud cible, des premières données de mesure de positionnement, des secondes données de mesure de positionnement et des informations d'indentification d'utilisateur.

6. Procédé selon l'une quelconque des revendications 1 à 5, dans lequel l'indication de non-notification d'un serveur de positionnement représente une indication continue de positionnement ou une indication de non-déclenchement d'un nouveau positionnement.

7. Procédé selon l'une quelconque des revendications 1 à 6, dans lequel les informations d'indentification d'utilisateur comprennent au moins un type d'informations suivantes :
l'identificateur d'une transaction au protocole de type A de positionnement d'évolution à long terme, ou identificateur d'une transaction de type LPPa, l'identificateur d'une mesure d'un centre de localisation mobile de desserte évolué, ou identificateur d'une mesure d'équipement utilisateur UE de type E-SMLC, ainsi qu'un identificateur de mesure d'utilisateur final de station de base évoluée, ou identificateur de mesure eNB UE.

8. Procédé selon l'une quelconque des revendications 1 à 7, dans lequel le procédé comprend en outre, pendant la réception par le noeud cible des informations d'indentification d'utilisateur de l'équipement utilisateur UE :
la réception, par le noeud cible, d'un identificateur ID de mesure de positionnement de l'équipement utilisateur UE, l'identificateur ID de mesure de positionnement représentant un identificateur ID de procédé de positionnement de cellule amélioré, E-CID.
